# EUROPEAN PATENT SPECIFICATION

(11) **EP 4 024 730 B1**
(45) Date of publication and mention of the grant of the patent: **11.11.2026**
(21) Application number: 19944921.6
(22) Date of filing: 10.09.2019
(51) Int. Cl.: G01S 7/4914, G01S 17/36, G01S 17/894, H04N 25/771

(54) **IMAGE SENSOR PIXEL CIRCUIT AND CONTROL METHOD, AND IMAGE SENSOR AND TERMINAL DEVICE**
BILDSENSORPIXELSCHALTUNG UND STEUERVERFAHREN SOWIE BILDSENSOR UND ENDGERÄT
CIRCUIT DE PIXEL DE CAPTEUR D'IMAGE ET PROCÉDÉ DE COMMANDE, ET CAPTEUR D'IMAGE ET DISPOSITIF TERMINAL

(43) Date of publication of application: 06.07.2022
(73) Proprietor: Huawei Technologies Co., Ltd., Longgang District Shenzhen, Guangdong 518129 (CN)
(72) Inventor: PAN, Han, Shenzhen, Guangdong 518129 (CN); SHI, Chen, Shenzhen, Guangdong 518129 (CN); LIU, Weihui, Shenzhen, Guangdong 518129 (CN); GONG, Xiaofeng, Shenzhen, Guangdong 518129 (CN); TANG, Yangyang, Shenzhen, Guangdong 518129 (CN); PAAK, Sunhom Steve, Shenzhen, Guangdong 518129 (CN)
(74) Representative: Epping - Hermann - Fischer
(86) International application number: PCT/CN2019/105230
(87) International publication number: WO 2021/046728

(56) References cited:
- WO-A1-2011/157726
- WO-A2-2006/086281
- CN-A- 1 467 857
- CN-A- 102 034 842
- CN-A- 105 981 092
- CN-A- 106 464 857
- US-A1- 2017 180 056

## Description

### TECHNICAL FIELD

This specification relates to the field of image capture technologies, and in particular, to an image sensor pixel circuit, a control method, an image sensor, and a terminal device.

### BACKGROUND

3D imaging based on a time of flight (TOF) means that a laser sends a modulated optical signal to a target, and then a sensor is used to receive an optical signal returned by the object; and distance information of the to-be-measured target object is obtained by detecting a time difference (that is, time of flight) between the transmitted optical pulse signal and the reflected optical pulse signal, to implement 3D imaging of the target object.

An indirect TOF (i-TOF) technology means that in pixels of an image sensor in TOF, photo-generated carriers (carriers for short in the following) generated after photodiodes receive a reflected optical signal are captured to different capture regions in a time division manner by using control signals of different phases, and a phase difference between the reflected signal and a transmitted signal is calculated in an integration manner; and then, a time of flight is calculated, and then depth information of a measured object is obtained.

However, because the control signals of the different phases cannot be instantaneously switched, when the control signals of the different phases are switched, there is a large difference between a quantity of carriers actually captured in the capture region and an expected value. Consequently, modulation contrast (MC) of the pixels of the image sensor is reduced, causing low ranging accuracy of the TOF.
WO 2011/157726 A1 is directed to the area of semiconductor sensors for the detection of phase information from received modulated electromagnetic waves by demodulation. A pixel for detection and demodulation of intensity-modulated light comprises a central light-sensitive region; at least a first and a second storage cells arranged opposite one another with respect to the light-sensitive region; at least a first and a second transfer path for transferring the charge carriers generated in the central light-sensitive region alternately to the first and the second storage cell, respectively; wherein each of the first and second transfer paths comprises (a) at least two switching gates arranged in series between the light-sensitive region and the first and second storage cell, respectively, and/or (b) at least one switching gate implemented as a stripe gate.
WO 2006/086281 A2 provides TOF (time-of-flight) and color sensing detector structures, which have x-axis spaced-apart y-axis extending finger-shaped gate structures with adjacent source collection regions. Preferably a potential barrier is implanted between adjacent gates and a bias gate is formed intermediate a gate and associated source region.

### SUMMARY

Embodiments of this specification provide an image sensor pixel circuit, a control method, an image sensor, and a terminal device, to reduce a difference between a quantity of carriers actually captured in a capture region and an expected value.

To achieve the foregoing objective, the following technical solutions are used in this specification.

According to a first aspect of this specification, an image sensor pixel circuit is provided. The image sensor pixel circuit includes a light sensitive element, and a left transmission channel and a right transmission channel that are separately coupled to a first end of the light sensitive element. The left transmission channel includes a first left transistor and a second left transistor that are connected in series. A gate of the first left transistor receives a first left modulation signal. A gate of the second left transistor receives a second left modulation signal. In addition, the right transmission channel includes a first right transistor and a second right transistor that are connected in series. A gate of the first right transistor receives a first right modulation signal. A gate of the second right transistor receives a second right modulation signal. In addition, the first left modulation signal and the second left modulation signal each have a period of T. The second left modulation signal and the first left modulation signal have a phase difference, so that the first left transistor and the second left transistor can be sequentially conducted. The first right modulation signal and the second right modulation signal each have a period of T. The second right modulation signal and the first right modulation signal have a phase difference, so that the first right transistor and the second right transistor can be sequentially conducted.

In this case, because conduction and cut-off of the transistor are not instantaneously completed, in actual working of the pixel circuit, when the first left transistor is switched from conduction to cut-off, the first left transistor is not completely cut off. Simultaneously, when the first right transistor is switched from cut-off to conduction, the first right transistor is not completely conducted. In this time period, it is possible that a gate voltage of the first left transistor to be cut off is the same as a gate voltage of the first right transistor to be conducted. In this case, a carrier can be transmitted to the first right transistor through the first left transistor. However, it can be learned from the foregoing that the second right modulation signal received by the gate of the second right transistor and the first right modulation signal received by the gate of the first right transistor have the phase difference. Therefore, when the first right transistor is not completely conducted, and when the first right transistor is just completely conducted, the second right transistor is not yet conducted. In this case, a carrier transmitted, through the left transmission channel, to and stored in a capture region cannot flow back, through the second right transistor, to another capture region coupled to the right transmission channel, so that a probability of horizontal carrier contention can be reduced. Therefore, a difference between a quantity of carriers actually captured in the capture region and an expected value is reduced, thereby effectively improving MC. Likewise, because the second left modulation signal and the first left modulation signal have the phase difference, when the first left transistor is not completely conducted, and when the first left transistor is just completely conducted, the second left transistor is not yet conducted. In this case, a carrier transmitted, through the right transmission channel, to and stored in a capture region cannot flow back, through the second left transistor, to another capture region coupled to the left transmission channel.

The image sensor pixel circuit further includes a left storage capacitor and a right storage capacitor. The left storage capacitor is located at an end that is of the left transmission channel and that is far away from the right transmission channel. The right storage capacitor is located at an end that is of the right transmission channel and that is far away from the left transmission channel. The first left transistor is coupled to the first end of the light sensitive element, and the second left transistor is coupled between the first left transistor and the left storage capacitor. The first right transistor is coupled to the first end of the light sensitive element, and the second right transistor is coupled between the first right transistor and the right storage capacitor. Based on this, a phase of the second left modulation signal is delayed by a first preset time t1 relative to a phase of the first left modulation signal. The first preset time t1 meets 0 < t1 ≤ T/2. In this way, a time in which the first left transistor and the second left transistor are both in a conducted state can be greater than or equal to T/2, thereby improving efficiency of transmitting a carrier through the left transmission channel. In this case, when the first left transistor and the second left transistor are both conducted, carriers accumulated in the light sensitive element are transmitted through the left transmission channel. In addition, a phase of the second right modulation signal is delayed by a second preset time t2 relative to a phase of the first right modulation signal. The second preset time t2 meets 0 < t2 ≤ T/2. Likewise, a time in which the first right transistor and the second right transistor are both in a conducted state can be greater than or equal to T/2, thereby improving efficiency of transmitting a carrier through the right transmission channel.

The left transmission channel further includes a fourth left transistor. The fourth left transistor is connected in series with the first left transistor and the second left transistor. A gate of the fourth left transistor receives a left direct current signal. The right transmission channel further includes a fourth right transistor. The fourth right transistor is connected in series with the first right transistor and the second right transistor. A gate of the fourth right transistor receives a right direct current signal. In this specification, the left direct current signal and the right direct current signal may be a same signal. In this way, the fourth left transistor and the fourth right transistor are in a conducted state both in a first time period in which the left transmission channel transmits a carrier and a second time period in which the right transmission channel transmits a carrier. Therefore, the fourth left transistor and the fourth right transistor may be disposed near the light sensitive element, and amplitudes of gate voltages of the fourth left transistor and the fourth right transistor may be adjusted based on disposition positions, so that steepness degrees of electric potential distribution in the left transmission channel and the right transmission channel can be further increased.

The fourth left transistor is coupled to a first electrode of the left storage capacitor, and the second left transistor is coupled between the first left transistor and the fourth left transistor. In this way, the left direct current signal received by the gate of the fourth left transistor can shield impact of the second left modulation signal received by the gate of the second left transistor on the left storage capacitor. In addition, a voltage value of the left direct current signal is greater than or equal to an amplitude of the second left modulation signal. When the voltage value of the left direct current signal is greater than the amplitude of the second left modulation signal, when the first left transistor, the second left transistor, and the fourth left transistor are all conducted, electric potential distribution in the left transmission channel is steep, so that efficiency of transmitting a carrier along a dashed line through the first left transistor, the second left transistor, and the fourth left transistor is improved. In addition, the fourth right transistor is coupled to a first electrode of the right storage capacitor, and the second right transistor is coupled between the first right transistor and the fourth right transistor. Likewise, the right direct current signal received by the gate of the fourth right transistor can shield impact of the second right modulation signal received by the gate of the second right transistor on the right storage capacitor. In addition, a voltage value of the right direct current signal is greater than or equal to an amplitude of the second right modulation signal. Likewise, when the voltage value of the right direct current signal is greater than the amplitude of the second right modulation signal, electric potential distribution in the right transmission channel is steep, so that efficiency of transmitting a carrier along a dashed line through the first right transistor, the second right transistor, and the fourth right transistor is improved.

Alternatively, the second left transistor is coupled to a first electrode of the left storage capacitor, and the first left transistor is coupled between the second left transistor and the fourth left transistor. A voltage value of the left direct current signal is less than or equal to an amplitude of the first left modulation signal. When the voltage value of the left direct current signal is less than the amplitude of the first left modulation signal, electric potential distribution in the left transmission channel can be steep, so that efficiency of horizontal carrier transmission is improved. In addition, the second right transistor is coupled to a first electrode of the right storage capacitor. The first right transistor is coupled between the second right transistor and the fourth right transistor. A voltage value of the right direct current signal is less than or equal to an amplitude of the first right modulation signal. When the voltage value of the right direct current signal is less than the amplitude of the first right modulation signal, electric potential distribution in the right transmission channel can be steep.

Optionally, the gate of the fourth left transistor and the gate of the fourth right transistor are located on a semiconductor substrate. The gate of the fourth left transistor and the gate of the fourth right transistor are symmetrically disposed relative to a coupling point of the left transmission channel and the right transmission channel. In this way, the left storage capacitor and the right storage capacitor can have a same distance or an approximately same distance from the coupling point of the left transmission channel and the right transmission channel, so that there is a same carrier transmission path in the left transmission channel and the right transmission channel, and then the left storage capacitor and the right storage capacitor have a same carrier absorption capability.

Optionally, the image sensor pixel circuit further includes a fifth transistor. The fifth transistor is coupled between the left transmission channel and the right transmission channel. A gate of the fifth transistor receives a fifth direct current signal. In this case, the fifth transistor can be always in a conducted state in the first time period in which the left transmission channel transmits a carrier and the second time period in which the right transmission channel transmits a carrier. In addition, a voltage value of the fifth direct current signal is less than or equal to an amplitude of the first left modulation signal, or is less than or equal to an amplitude of the first right modulation signal. When the voltage value of the fifth direct current signal is less than the amplitude of the first left modulation signal, electric potential distribution in the left transmission channel is steep, so that efficiency of horizontal carrier transmission is higher. When the voltage value of the fifth direct current signal is less than the amplitude of the first right modulation signal, electric potential distribution in the right transmission channel is steep, so that efficiency of horizontal carrier transmission is higher. In some embodiments of this specification, the first left modulation signal and the first right modulation signal have a same amplitude.

Optionally, the gate of the first left transistor, the gate of the first right transistor, and the gate of the fifth transistor are located on the semiconductor substrate, and the gate of the first left transistor and the gate of the first right transistor are symmetrically disposed relative to the gate of the fifth transistor. In this way, the left storage capacitor and the right storage capacitor can have a same capability of absorbing carriers accumulated in the light sensitive element.

Optionally, the first left modulation signal and the first right modulation signal have a phase difference of 180°, and have a same amplitude. In this way, theoretically, the first right transistor can be cut off when the first left transistor is conducted, or the first right transistor can be conducted when the first left transistor is cut off. In addition, the second left modulation signal and the second right modulation signal have a phase difference of 180°, and have a same amplitude. Therefore, theoretically, the second right transistor is cut off (or conducted) when the second left transistor is conducted (or cut off). In this case, the left storage capacitor and the right storage capacitor can store carriers in a time division manner.

Optionally, the first preset time t1 may be the same as the second preset time t2, to reduce a probability of an offset in the left transmission channel or the right transmission channel, so that the left storage capacitor and the right storage capacitor have a same carrier absorption capability.

According to a second aspect of this specification, a method for controlling an image sensor pixel circuit is provided. The image sensor pixel circuit includes a light sensitive element, and a left transmission channel and a right transmission channel that are separately coupled to a first end of the light sensitive element. The left transmission channel includes a first left transistor and a second left transistor that are connected in series. The right transmission channel includes a first right transistor and a second right transistor that are connected in series. On this basis, the method for controlling an image sensor pixel circuit includes: A gate of the first left transistor receives a first left modulation signal, so that the first left transistor is conducted; and a gate of the second left transistor receives a second left modulation signal, so that the second left transistor is conducted, where the first left modulation signal and the second left modulation signal each have a period of T, and the second left modulation signal and the first left modulation signal have a phase difference. Next, a gate of the first right transistor receives a first right modulation signal, so that the first right transistor is conducted; and a gate of the second right transistor receives a second right modulation signal, so that the second right transistor is conducted, where the first right modulation signal and the second right modulation signal each have a period of T, and the second right modulation signal and the first right modulation signal have a phase difference. The control method has same technical effects as the image sensor pixel circuit provided in the foregoing embodiment, and details are not described herein again.

The image sensor pixel circuit further includes a left storage capacitor and a right storage capacitor. The left storage capacitor is located at an end that is of the left transmission channel and that is far away from the right transmission channel. The right storage capacitor is located at an end that is of the right transmission channel and that is far away from the left transmission channel. The first left transistor is coupled to the first end of the light sensitive element, and the second left transistor is coupled between the first left transistor and the left storage capacitor. The first right transistor is coupled to the first end of the light sensitive element, and the second right transistor is coupled between the first right transistor and the right storage capacitor. Based on this, a phase of the second left modulation signal is delayed by a first preset time t1 relative to a phase of the first left modulation signal. The first preset time t1 meets 0 < t1 ≤ T/2. In this way, a time in which the first left transistor and the second left transistor are both in a conducted state can be greater than or equal to T/2, thereby improving efficiency of transmitting a carrier through the left transmission channel. In this case, when the first left transistor and the second left transistor are both conducted, carriers accumulated in the light sensitive element are transmitted through the left transmission channel. In addition, a phase of the second right modulation signal is delayed by a second preset time t2 relative to a phase of the first right modulation signal. The second preset time t2 meets 0 < t2 ≤ T/2. Likewise, a time in which the first right transistor and the second right transistor are both in a conducted state can be greater than or equal to T/2, thereby improving efficiency of transmitting a carrier through the right transmission channel.

The left transmission channel further includes a fourth left transistor. The fourth left transistor is coupled between the left storage capacitor and the second left transistor. The right transmission channel further includes a fourth right transistor. The fourth right transistor is coupled between the right storage capacitor and the second right transistor. Based on this, the control method further includes: A gate of the fourth left transistor receives a left direct current signal, where a voltage value of the left direct current signal is greater than or equal to an amplitude of the second left modulation signal. A gate of the fourth right transistor receives a right direct current signal, where a voltage value of the right direct current signal is greater than or equal to an amplitude of the second right modulation signal. Technical effects of the left direct current signal and the right direct current signal are the same as those described above, and details are not described herein again. Alternatively, the second left transistor is coupled to a first electrode of the left storage capacitor, and the first left transistor is coupled between the second left transistor and the fourth left transistor. A voltage value of the left direct current signal is less than or equal to an amplitude of the first left modulation signal. When the voltage value of the left direct current signal is less than the amplitude of the first left modulation signal, electric potential distribution in the left transmission channel can be steep, so that efficiency of horizontal carrier transmission is improved. In addition, the second right transistor is coupled to a first electrode of the right storage capacitor. The first right transistor is coupled between the second right transistor and the fourth right transistor. A voltage value of the right direct current signal is less than or equal to an amplitude of the first right modulation signal. When the voltage value of the right direct current signal is less than the amplitude of the first right modulation signal, electric potential distribution in the right transmission channel can be steep.

Optionally, amplitudes of the first left modulation signal, the second left modulation signal, and the third left modulation signal are sequentially increased, so that a steepness degree of electric potential distribution in the left transmission channel is increased. Amplitudes of the first right modulation signal, the second right modulation signal, and the third right modulation signal are sequentially increased, so that a steepness degree of electric potential distribution in the right transmission channel is increased.

Optionally, the first left modulation signal, the second left modulation signal, and the third left modulation signal all have a same amplitude. The first right modulation signal, the second right modulation signal, and the third right modulation signal all have a same amplitude. This can simplify a modulation signal control manner.

Optionally, the image sensor pixel circuit further includes a fifth transistor. The fifth transistor is coupled between the left transmission channel and the right transmission channel. Based on this, the method further includes: A gate of the fifth transistor receives a fifth direct current signal, where a voltage value of the fifth direct current signal is less than or equal to an amplitude of the first left modulation signal, or is less than or equal to an amplitude of the first right modulation signal. Technical effects of the fifth direct current signal are the same as those described above, and details are not described herein again.

Optionally, the first left modulation signal and the first right modulation signal have a phase difference of 180°, and have a same amplitude. The second left modulation signal and the second right modulation signal have a phase difference of 180°, and have a same amplitude. Technical effects of the setting manner of the first left modulation signal, the first right modulation signal, the second left modulation signal, and the second right modulation signal are the same as those described above, and details are not described herein again.

Optionally, the first preset time t1 may be the same as the second preset time t2. Technical effects in which the first preset time t1 is the same as the second preset time t2 are the same as those described above, and details are not described herein again.

According to a third aspect of this specification, an image sensor pixel circuit is provided. The image sensor pixel circuit includes a light sensitive element, and a left transmission channel and a right transmission channel that are separately coupled to a first end of the light sensitive element. The image sensor pixel circuit further includes a left storage capacitor located at an end that is of the left transmission channel and that is far away from the right transmission channel, and a right storage capacitor located at an end that is of the right transmission channel and that is far away from the left transmission channel. The left transmission channel includes a first left transistor and a second left transistor that are connected in series. The first left transistor is coupled to the first end of the light sensitive element, and the second left transistor is coupled between the left storage capacitor and the first left transistor. A gate of the first left transistor receives a first left modulation signal. A first right transistor is coupled to the first end of the light sensitive element, and a gate of the second left transistor receives a second left modulation signal. The first left modulation signal and the second left modulation signal each have a period of T, and have a same phase. An amplitude of the first left modulation signal is less than an amplitude of the second left modulation signal.

In this way, after the first left transistor and the second left transistor are both conducted, electric potential distribution in the left transmission channel can be steep, thereby helping improve, in the foregoing first time period, efficiency of transmitting, through the left transmission channel, carriers accumulated in the light sensitive element, to improve a horizontal carrier modulation capability. Therefore, a difference between a quantity of carriers actually captured by the left storage capacitor coupled to the left transmission channel and an expected value is reduced, thereby effectively improving MC.

In addition, a first right modulation signal and a second right modulation signal both have a period of T, and have a same phase. An amplitude of the first right modulation signal is less than an amplitude of the second right modulation signal. In this way, after the first right transistor and a second right transistor are both conducted, electric potential distribution in the right transmission channel can be steep, thereby helping improve, in the foregoing second time period, efficiency of transmitting, through the right transmission channel, carriers accumulated in the light sensitive element, to improve a horizontal carrier modulation capability. Therefore, a difference between a quantity of carriers actually captured by the right storage capacitor coupled to the right transmission channel and an expected value is reduced, thereby effectively improving MC.

The left transmission channel further includes a fourth left transistor. The fourth left transistor is connected in series with the first left transistor and the second left transistor. A gate of the fourth left transistor receives a left direct current signal. The right transmission channel further includes a fourth right transistor. The fourth right transistor is connected in series with the first right transistor and the second right transistor. A gate of the fourth right transistor receives a right direct current signal. Technical effects of the fourth left transistor and the fourth right transistor are the same as those described above, and details are not described herein again.

The fourth left transistor is coupled to a first electrode of the left storage capacitor, and the second left transistor is coupled between the first left transistor and the fourth left transistor. A voltage value of the left direct current signal is greater than or equal to the amplitude of the second left modulation signal. Technical effects of the disposition position of the fourth left transistor are the same as those described above, and details are not described herein again. The fourth right transistor is coupled to a first electrode of the right storage capacitor, and the second right transistor is coupled between the first right transistor and the fourth right transistor. A voltage value of the right direct current signal is greater than or equal to the amplitude of the second right modulation signal. Technical effects of the disposition position of the fourth right transistor are the same as those described above, and details are not described herein again.

Alternatively, the second left transistor is coupled to a first electrode of the left storage capacitor. The first left transistor is coupled between the second left transistor and the fourth left transistor. A voltage value of the left direct current signal is less than or equal to the amplitude of the first left modulation signal. Technical effects of the disposition position of the fourth left transistor are the same as those described above, and details are not described herein again. The second right transistor is coupled to a first electrode of the right storage capacitor. The first right transistor is coupled between the second right transistor and the fourth right transistor. A voltage value of the right direct current signal is less than or equal to the amplitude of the first right modulation signal. Technical effects of the disposition position of the fourth right transistor are the same as those described above, and details are not described herein again.

Optionally, the gate of the fourth left transistor and the gate of the fourth right transistor are located on a semiconductor substrate. The gate of the fourth left transistor and the gate of the fourth right transistor are symmetrically disposed relative to a coupling point of the left transmission channel and the right transmission channel. Technical effects of the disposition manner of the gate of the fourth left transistor and the gate of the fourth right transistor are the same as those described above, and details are not described herein again.

Optionally, the image sensor pixel circuit further includes a fifth transistor. The fifth transistor is coupled between the left transmission channel and the right transmission channel. A gate of the fifth transistor receives a fifth direct current signal. A voltage value of the fifth direct current signal is less than or equal to the amplitude of the first left modulation signal, or is less than or equal to the amplitude of the first right modulation signal. Technical effects of the fifth transistor are the same as those described above, and details are not described herein again.

Optionally, the gate of the first left transistor, a gate of the first right transistor, and the gate of the fifth transistor are located on the semiconductor substrate, and the gate of the first left transistor and the gate of the first right transistor are symmetrically disposed relative to the gate of the fifth transistor. Technical effects of the disposition manner of the gate of the first left transistor, the gate of the first right transistor, and the gate of the fifth transistor are the same as those described above, and details are not described herein again.

Optionally, the first left modulation signal and the first right modulation signal have a phase difference of 180°. The second left modulation signal and the second right modulation signal have a phase difference of 180°. Technical effects of the setting manner of the first left modulation signal, the first right modulation signal, the second left modulation signal, and the second right modulation signal are the same as those described above, and details are not described herein again.

According to a fourth aspect of this specification, a method for controlling an image sensor pixel circuit is provided. The image sensor pixel circuit includes a light sensitive element, and a left transmission channel and a right transmission channel that are separately coupled to a first end of the light sensitive element. The left transmission channel includes a first left transistor and a second left transistor that are connected in series. The right transmission channel includes a first right transistor and a second right transistor that are connected in series. In addition, the image sensor pixel circuit further includes a left storage capacitor located at an end that is of the left transmission channel and that is far away from the right transmission channel, and a right storage capacitor located at an end that is of the right transmission channel and that is far away from the left transmission channel. The first left transistor is coupled to the first end of the light sensitive element, and the second left transistor is coupled between the left storage capacitor and the first left transistor. The first right transistor is coupled to the first end of the light sensitive element, and the second right transistor is coupled between the right storage capacitor and the first right transistor. On this basis, the control method includes: A gate of the first left transistor receives a first left modulation signal, so that the first left transistor is conducted; and a gate of the second left transistor receives a second left modulation signal, so that the second left transistor is conducted, where the first left modulation signal and the second left modulation signal each have a period of T, and have a same phase, and an amplitude of the first left modulation signal is less than an amplitude of the second left modulation signal. A gate of the first right transistor receives a first right modulation signal, so that the first right transistor is conducted; and a gate of the second right transistor receives a second right modulation signal, so that the second right transistor is conducted, where the first right modulation signal and the second right modulation signal each have a period of T, and have a same phase, and an amplitude of the first right modulation signal is less than an amplitude of the second right modulation signal. The control method has same technical effects as the image sensor pixel circuit provided in the foregoing embodiment, and details are not described herein again.

The left transmission channel further comprises a fourth left transistor, the fourth left transistor is connected in series with the first left transistor and the second left transistor, and a gate of the fourth left transistor receives a left direct current signal; and the right transmission channel further comprises a fourth right transistor, the fourth right transistor is connected in series with the first right transistor and the second right transistor, and a gate of the fourth right transistor receives a right direct current signal.

The fourth left transistor is coupled to a first electrode of the left storage capacitor, the second left transistor is coupled between the first left transistor and the fourth left transistor, and a voltage value of the left direct current signal is greater than or equal to an amplitude of the second left modulation signal; and the fourth right transistor is coupled to a first electrode of the right storage capacitor, the second right transistor is coupled between the first right transistor and the fourth right transistor, and a voltage value of the right direct current signal is greater than or equal to an amplitude of the second right modulation signal. Alternatively, the second left transistor is coupled to a first electrode of the left storage capacitor. The first left transistor is coupled between the second left transistor and the fourth left transistor. A voltage value of the left direct current signal is less than or equal to the amplitude of the first left modulation signal. The second right transistor is coupled to a first electrode of the right storage capacitor. The first right transistor is coupled between the second right transistor and the fourth right transistor. A voltage value of the right direct current signal is less than or equal to the amplitude of the first right modulation signal.

Optionally, the first left modulation signal and the first right modulation signal have a phase difference of 180°. The second left modulation signal and the second right modulation signal have a phase difference of 180°. Technical effects of the setting manner of the first left modulation signal, the first right modulation signal, the second left modulation signal, and the second right modulation signal are the same as those described above, and details are not described herein again.

According to a fifth aspect of this specification, an image sensor is provided. The image sensor includes a semiconductor substrate and a pixel array disposed on the semiconductor substrate. The pixel array includes a plurality of pixel structures arranged in an array. Each pixel structure includes any one of the image sensor pixel circuits described above. The image sensor has same technical effects as the image sensor pixel circuits provided in the foregoing embodiments, and details are not described herein again.

According to a sixth aspect of this specification, a terminal device is provided. The terminal device includes a drive chip and the image sensor described above. The drive chip includes a modulation signal end configured to provide a modulation signal. The modulation signal end is separately coupled to the gates of the first left transistor, the second left transistor, the first right transistor, and the second right transistor in the image sensor pixel circuit. The terminal device has same technical effects as the image sensor provided in the foregoing embodiment, and details are not described herein again.

### BRIEF DESCRIPTION OF DRAWINGS

The embodiments detailed along Figures 8-9 are not according to the claimed invention but useful for understanding the invention.
FIG. 1 is a schematic diagram of a structure of a terminal device according to an embodiment of this specification,
FIG. 2 is a schematic diagram of a structure of another terminal device according to an embodiment of this specification;
FIG. 3a is a schematic diagram of depth image capture according to an embodiment of this specification;
FIG. 3b is a sequence diagram of a transmitted optical signal and a reflected optical signal according to an embodiment of this specification;
FIG. 4a is a schematic diagram of a structure of a camera in FIG. 2;
FIG. 4b is a schematic diagram of a pixel circuit of a single pixel structure in FIG. 4a;
FIG. 4c is a schematic diagram of a cross-section of a pixel structure in FIG. 4a;
FIG. 4d is a top view of a single pixel structure according to an embodiment of this specification;
FIG. 5 is a schematic diagram of signal control of the pixel circuit shown in FIG. 4b;
FIG. 6 is a schematic diagram of carrier transmission in the pixel circuit shown in FIG. 4b;
FIG. 7a is another schematic diagram of carrier transmission in the pixel circuit shown in FIG. 4b;
FIG. 7b is another schematic diagram of carrier transmission in the pixel circuit shown in FIG. 4b;
FIG. 7c is another schematic diagram of carrier transmission in the pixel circuit shown in FIG. 4b;
FIG. 7d is another schematic diagram of carrier transmission in the pixel circuit shown in FIG. 4b;
FIG. 8a is a schematic diagram of another pixel circuit of a single pixel structure in FIG. 4a;
FIG. 8b is a schematic diagram of signal control of the pixel circuit shown in FIG. 8a;
FIG. 9a is a schematic diagram of carrier transmission in the pixel circuit shown in FIG. 8a;
FIG. 9b is another schematic diagram of carrier transmission in the pixel circuit shown in FIG. 8a;
FIG. 10a is a schematic diagram of another pixel circuit of a single pixel structure in FIG. 4a;
FIG. 10b is a schematic diagram of a cross-section of a pixel structure in FIG. 10a;
FIG. 11a is a schematic diagram of carrier transmission in the pixel circuit shown in FIG. 10a;
FIG. 11b is another schematic diagram of carrier transmission in the pixel circuit shown in FIG. 10a;
FIG. 11c is another schematic diagram of carrier transmission in the pixel circuit shown in FIG. 10a;
FIG. 11d is another schematic diagram of carrier transmission in the pixel circuit shown in FIG. 10a;
FIG. 12a is a schematic diagram of another pixel circuit of a single pixel structure in FIG. 4a;
FIG. 12b is a schematic diagram of a cross-section of a pixel structure in FIG. 12a;
FIG. 12c is a schematic diagram of carrier transmission in the pixel circuit shown in FIG. 12a;
FIG. 12d is a schematic diagram of carrier transmission in the pixel circuit shown in FIG. 12a;
FIG. 13 is a schematic diagram of another pixel circuit of a single pixel structure in FIG. 4a;
FIG. 14 is another schematic diagram of signal control of the pixel circuit shown in FIG. 4b; and
FIG. 15 is another schematic diagram of signal control of the pixel circuit shown in FIG. 8a.

Reference numerals of the accompanying drawings:
01-terminal device; 02-drive chip; 10-display module; 11-middle frame; 12-rear housing; OP1-modulation signal end; OP2-direct current signal end; 100-camera; 200-image sensor; 201-semiconductor substrate; 202-pixel array; 203-pixel structure; 210-readout circuit; 211-control circuit; 212-image processing circuit; 20-light sensitive element; 30-left transmission channel; 31-right transmission channel; PGA-first left transistor; TGA-second left transistor; TGAO-third left transistor; PGB-first right transistor; TGB-second right transistor; TGBO-third right transistor; MPGA-first left modulation signal; MTGA-second left modulation signal; MPGB-first right modulation signal; MTGB-second right modulation signal; MTGA0-third left modulation signal; MTGBO-third right modulation signal; TXA-fourth left transistor; TXB-fourth right transistor; and PG0-fifth transistor.

### DESCRIPTION OF EMBODIMENTS

The following describes the technical solutions in embodiments of this specification with reference to the accompanying drawings in embodiments of this specification. It is clear that the described embodiments are merely some but not all of embodiments of this specification.

The following terms "first" and "second" are merely intended for a purpose of description, and shall not be understood as an indication or implication of relative importance or implicit indication of a quantity of indicated technical features. Therefore, a feature limited by "first", "second", or the like may explicitly or implicitly include one or more features.

In addition, in this specification, position terms such as "above", "below", "left", and "right" are defined relative to schematic component positions in the accompanying drawings. It should be understood that these directional terms are relative concepts and are used for relative description and clarification, and may be correspondingly changed based on a change of the component positions in the accompanying drawings.

In this specification, unless otherwise clearly specified and limited, the term "coupled" should be broadly understood, for example, may be directly electrically connected, or may be indirectly electrically connected by using an intermediate medium.

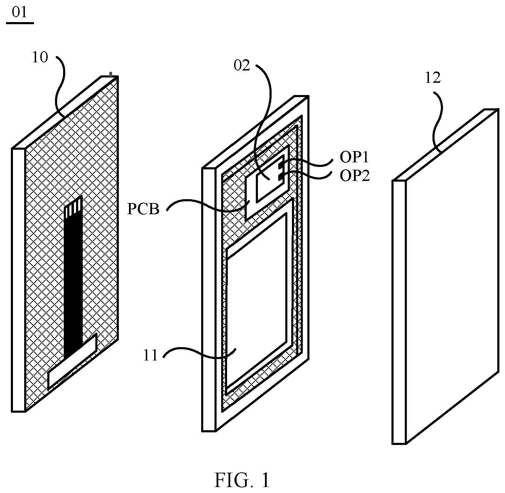

An embodiment of this specification provides a terminal device. The terminal device includes, for example, a mobile phone, a tablet computer, a personal digital assistant (PDA), or an in-vehicle computer. A specific form of the terminal device is not specially limited in embodiments of this specification. For ease of description, the following provides descriptions by using an example in which the terminal device is a mobile phone shown in FIG. 1.

As shown in FIG. 1, a terminal device 01 mainly includes but is not limited to a display module 10. A side that is of the middle frame 11 and that faces the display module 10 is used to carry the display module 10, and internal elements such as a battery, a printed circuit board (PCB), a camera, and an antenna are disposed on a side that is of the middle frame 11 and that faces the rear cover 12. The rear housing 12 is buckled to the middle frame 11, to protect the internal elements.

In addition, the foregoing provides descriptions by using an example in which the terminal device 01 includes one display module 10. In some embodiments, the terminal device 01 may include one or at least two display modules 10.

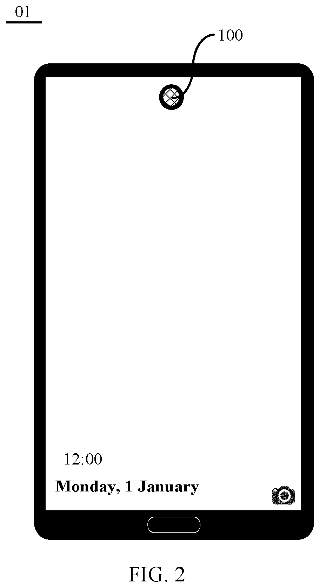

In addition, as an integration degree of the terminal device 01 increases, the terminal device 01 may further include a camera 100 shown in FIG. 2. The camera 100 may be a depth camera, and can obtain depth information of a photographed object, to implement gesture recognition, face recognition, or the like.

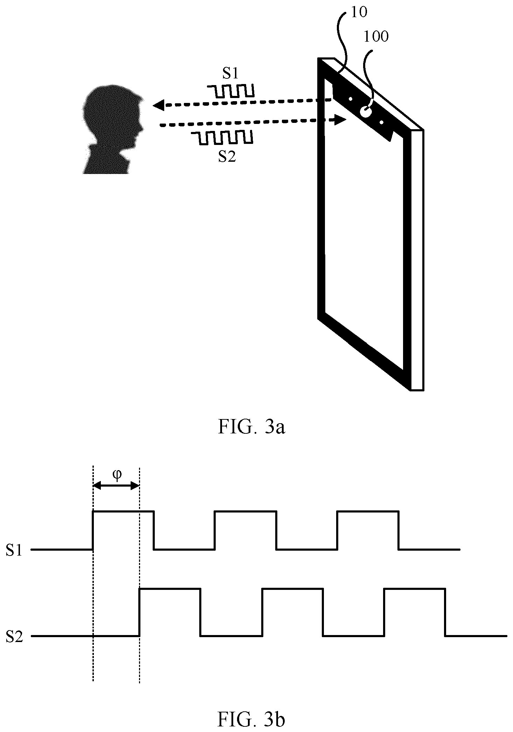

The camera 100 may be based on a 3D imaging technology of TOF. As shown in FIG. 3a, the camera 100 sends a modulated transmitted optical signal S1 to a photographed object, such as a face. A reflected optical signal S2 generated after the transmitted optical signal S1 is reflected by the face is received by the camera 100. Therefore, the camera 100 can obtain depth information (that is, distance information) of the measured object by calculating a time difference between the transmitted optical signal S1 and the reflected optical signal S2, that is, a phase difference φ, between the transmitted optical signal S1 and the reflected optical signal S2 in FIG. 3b, to implement face recognition. In some embodiments, the terminal device 01 may include at least one camera 100.

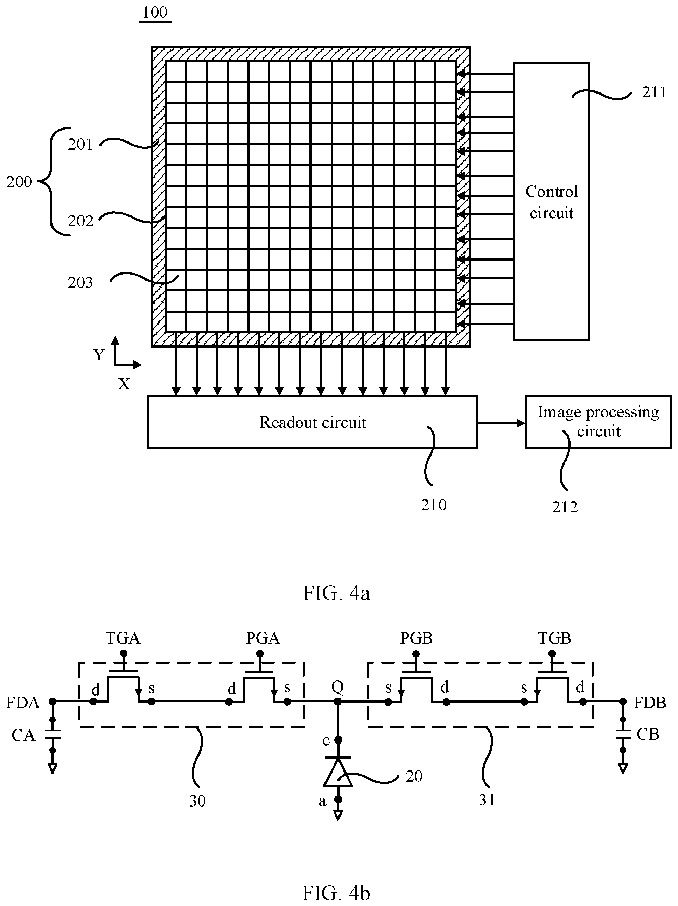

In some embodiments of this specification, the camera 100 includes a lens and an image sensor 200 shown in FIG. 4a. The image sensor 200 includes a semiconductor substrate 201 and a pixel array 202 disposed on the semiconductor substrate 201.

The pixel array 202 includes a plurality of pixel structures 203 arranged in an array. An image sensor pixel circuit (pixel circuit for short in the following) is disposed in each pixel structure 203. The pixel circuit includes a light sensitive element 20 shown in FIG. 4b. In some embodiments of this specification, the light sensitive element 20 may be a charge coupled device (CCD), or may be a complementary metal-oxide-semiconductor (CMOS) phototransistor, such as a photodiode. The light sensitive element 20 may convert, into an electrical signal, the reflected optical signal S2 that is incident after passing through the lens in the camera 100.

For ease of description, in this embodiment of this specification, pixel structures 203 arranged in one line in a horizontal direction X is referred to as a same row of pixel structures 203, and pixel structures 203 arranged in one line in a vertical direction Y is referred to as a same column of pixel structures 203.

On this basis, the camera 100 further includes a readout circuit 210 coupled to pixel circuits of all columns of pixel structures 203, a control circuit 211 coupled to pixel circuits of all rows of pixel structures 203, and an image processing circuit 212 coupled to the readout circuit 210. The control circuit 211 may control each of light sensitive elements 20 in each row to perform optical-to-electrical conversion at an exposure stage of a pixel circuit, and transmit a converted electrical signal to the readout circuit 210 in a readout time of the pixel circuit. The readout circuit 210 may perform analog-to-digital conversion and signal amplification processing on the input signal.

Next, the readout circuit 210 transmits a processed electrical signal to the image processing circuit 212. The image processing circuit 212 may generate an image signal with depth information based on the received electrical signal.

In addition, because the reflected light signal S2 generated by the photographed object is not incident onto light sensitive elements 20 in real time, after each light sensitive element 20 performs optical-to-electrical conversion, the pixel circuit in the pixel structure 203 needs to capture, in one integration period, carriers generated by the light sensitive elements 20 in response to the reflected optical signal S2, to implement integration processing, to obtain the phase difference φ, between the reflected optical signal S2 and the transmitted optical signal S1, shown in FIG. 3b. Then, the pixel circuit transmits an electrical signal obtained after the integration processing to the readout circuit 210. Therefore, accuracy of an electrical signal output by the pixel structure 203 can be improved.

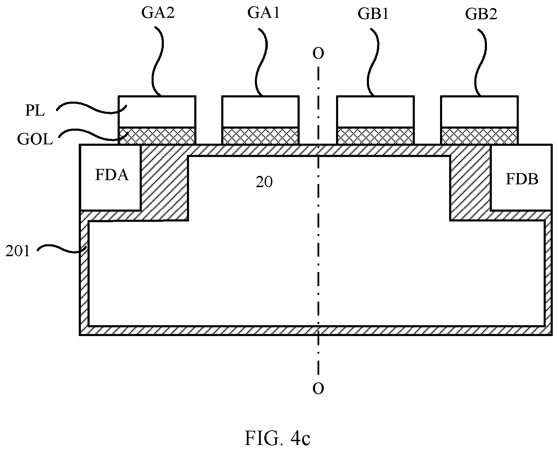

In this case, a coupling circuit structure of elements in the pixel circuit of the pixel structure 203 is shown in FIG. 4b. The pixel circuit of the pixel structure 203 further includes a left transmission channel 30 and a right transmission channel 31 that are coupled to a first end c of the light sensitive element 20. In some embodiments, when the light sensitive element 20 is a photodiode, the first end c of the light sensitive element 20 may be a cathode of the photodiode, and a second end a of the light sensitive element 20 may be an anode of the photodiode. The second end of the light sensitive element 20 is coupled to a semiconductor substrate 201 shown in FIG. 4c (a diagram of a cross-section of the pixel structure 203).

On this basis, as shown in FIG. 4b, the left transmission channel 30 includes a first left transistor PGA and a second left transistor TGA that are connected in series, and the right transmission channel 32 includes a first right transistor PGB and a second right transistor TGB that are connected in series.

It should be noted that in some embodiments of this specification, for example, the transistors are all N-type transistors. That the first left transistor PGA and the second left transistor TGA are connected in series means that as shown in FIG. 4b, a source (s) of the second left transistor TGA is coupled to a drain (d) of the first left transistor PGA. Alternatively, when the first left transistor PGA and the second left transistor TGA are P-type transistors, that the first left transistor PGA and the second left transistor TGA are connected in series means that a drain of the second left transistor TGA is coupled to a source of the first left transistor PGA. That the first right transistor PGB and the second right transistor TGB are connected in series has a same meaning as that described above, and details are not described herein again.

It should be noted that "PG" is an English abbreviation of photo gate, and TG is an abbreviation of turbo gate.

In addition, types of the first left transistor, the second left transistor, the first right transistor, and the second right transistor are not limited in this specification, provided that when effective conduction voltages are separately applied to gates of the transistors, it can be ensured that the transistors are in a conducted state; and when effective cut-off voltages are separately applied to the gates of the transistors, it can be ensured that the transistors are in a cut-off state. For ease of description, the following provides all descriptions by using an example in which the first left transistor and the first right transistor each are a "PG", and the second left transistor and the second right transistor each are a "TG".

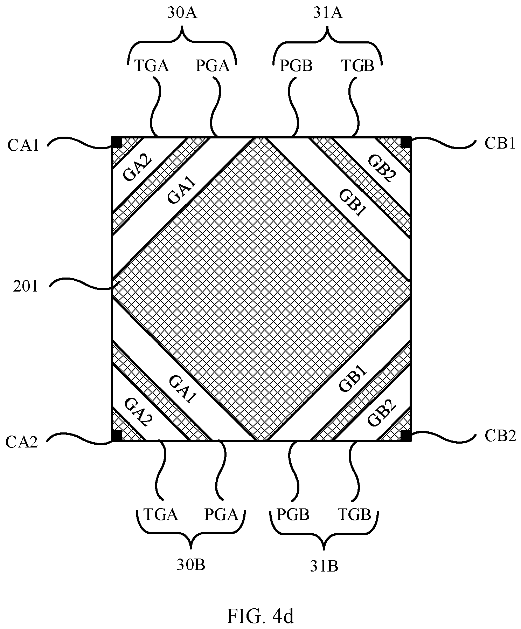

As shown in FIG. 4c (a diagram of a cross-section of the pixel structure 203), the light sensitive element 20 in the pixel structure 203 may be disposed on the semiconductor substrate 201. In addition, a gate GA1 of the first left transistor PGA, a gate GA2 of the second left transistor TGA, a gate GB1 of the first right transistor PGB, and a gate GB2 of the second right transistor TGB are disposed on the semiconductor substrate 201. A top-view structure of the gates of the transistors on the semiconductor substrate 201 may be shown in FIG. 4d.

Based on this, the light sensitive element 20 is disposed on the semiconductor substrate 201. To improve an optical-to-electrical conversion effect of the light sensitive element 20, a light receiving area of the light sensitive element 20 may approximate to an area of a surface that is of the semiconductor substrate 201 and that is used to manufacture the light sensitive element 20 and the gates of the transistors. In this case, the first end c of the light sensitive element 20 may be an end close to the gates of the transistors, and the second end a of the light sensitive element 20 is an end away from the gates of the transistors.

In some embodiments of this specification, when the transistors are all N-type transistors, a material constituting the semiconductor substrate 201 may be a P-type semiconductor material. Alternatively, when the transistors are all P-type transistors, a material constituting the semiconductor substrate 201 may be an N-type semiconductor material. In addition, the gates of the transistors each may include a gate oxide layer (GOL) close to the semiconductor substrate 201, and a poly layer (PL) located on a side that is of the gate oxide layer and that is far away from the semiconductor substrate 201.

In addition, to capture a carrier generated by the light sensitive element 20 in response to incident light, N-type doping may be performed on the semiconductor substrate 201 at an edge position of the pixel structure 203, to form a left floating diffusion (FD) region on a left side, represented by "FDA", and a right floating diffusion FDB on a right side.

A left storage capacitor CA shown in FIG. 4b is located at the left floating diffusion region FDA, that is, an end that is of the left transmission channel 30 and that is far away from the right transmission channel 31. When the first left transistor PGA and the second left transistor TGA are conducted, a carrier generated by the light sensitive element 20 in response to incident light may be transmitted to the left storage capacitor CA through the left transmission channel 30, and the left storage capacitor CAmay store the carrier.

In addition, a right storage capacitor CB shown in FIG. 4b is located at the right floating diffusion region FDB, that is, an end that is of the right transmission channel 31 and that is far away from the left transmission channel 30. When the first right transistor PGB and the second right transistor TGB are conducted, a carrier generated by the light sensitive element 20 in response to incident light may be transmitted to the left storage capacitor CA through the right transmission channel 31, and the right storage capacitor CB may store the carrier.

It should be noted that, in some embodiments of this specification, the left storage capacitor CA and the right storage capacitor CB are connected in a topology structure in FIG. 4b. "Left" in the left storage capacitor CA and "right" in the right storage capacitor CB impose no specific limitation on actual positions of the two storage capacitors on the semiconductor substrate 201. Alternatively, in some other embodiments of this specification, as shown in FIG. 4c, "left" in the left storage capacitor CA may be used to impose a limitation that the left storage capacitor CA is located at a left end of the semiconductor substrate 201, and "right" in the right storage capacitor CB may be used to impose a limitation that the right storage capacitor CB is located at a right end of the semiconductor substrate 201.

Based on this, in some possible embodiments, the gate GA1 of the first left transistor PGA and the gate GB1 of the first right transistor PGB are symmetrically disposed relative to a coupling point Q (shown in FIG. 4b) of the left transmission channel 30 and the right transmission channel 31, and the gate GA2 of the second left transistor TGAand the gate GB2 of the second right transistor TGB are symmetrically disposed relative to the coupling point Q (shown in FIG. 4b) of the left transmission channel 30 and the right transmission channel 31. In this way, the left storage capacitor CA and the right storage capacitor CB can have a same capability of absorbing carriers accumulated in the light sensitive element 20.

When the pixel structure 203 is a left-right symmetrical graph, the coupling point Q (shown in FIG. 4b) of the left transmission channel 30 and the right transmission channel 31 may be located at a center line O-O (shown in FIG. 4c) of the pixel structure 203. In this case, the center line O-O may pass through the coupling point Q of the left transmission channel 30 and the right transmission channel 31.

For ease of description, in the following embodiments, a structure and a control manner of the pixel circuit are described in detail by using an example in which as shown in FIG. 4a, the first left transistor PGA is coupled to the first end c of the light sensitive element 20, and the second left transistor TGA is coupled between the left storage capacitor CA and the first left transistor PGA; and the first right transistor PGB is coupled to the first end c of the light sensitive element 20, and the second right transistor TGB is coupled between the right storage capacitor CB and the first right transistor PGB.

### Example 1

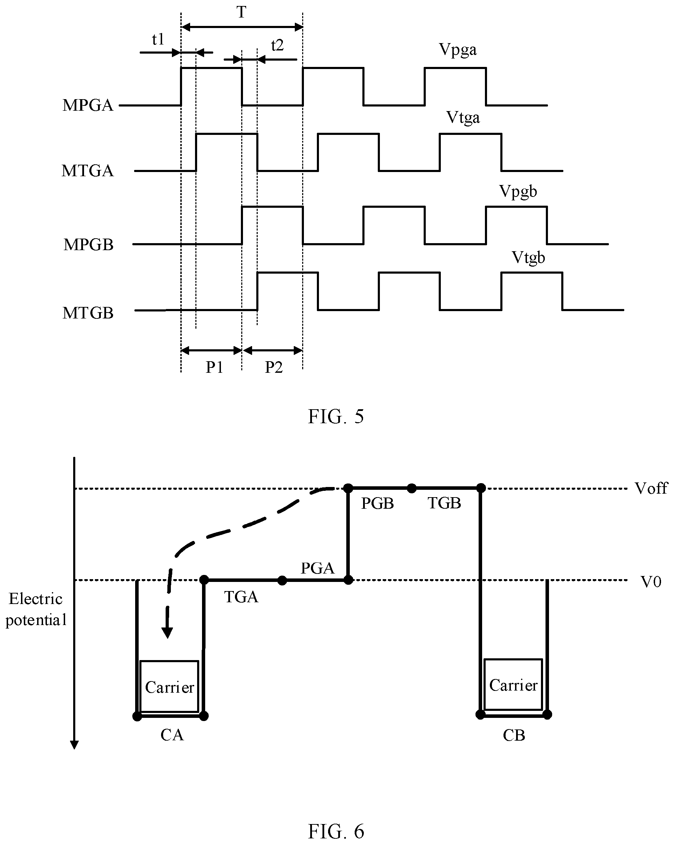

In this example, which does not correspond to the claimed invention but contributes to understanding the invention, the gate GA1 of the first left transistor PGA receives a first left modulation signal MPGA shown in FIG. 5 (a sequence diagram of voltage signals applied to the gates of the transistors in FIG. 4b), and the gate GA2 of the second left transistor TGAreceives a second left modulation signal MTGA. The second left modulation signal MTGA and the first left modulation signal MPGA have a phase difference. The gate GB1 of the first right transistor PGB receives a first right modulation signal MPGB, and the gate GB2 of the second right transistor TGB receives a second right modulation signal MTGB. The second right modulation signal MTGB and the first right modulation signal MPGB have a phase difference.

It should be noted that the terminal device 01 may further include a drive chip 02 disposed on the PCB as shown in FIG. 1. The drive chip 02 has a modulation signal end OP1 configured to provide a modulation signal. In some embodiments of this specification, the modulation signal end OP1 may be coupled to the gate of the first left transistor PGA, the gate of the second left transistor TGA, the gate of the first right transistor PGB, and the gate of the second right transistor TGB in the pixel circuit, so that the modulation signal end OP1 can respectively provide the first left modulation signal MPGA, the second left modulation signal MTGA, the first right modulation signal MPGB, and the second right modulation signal MTGB for the gate of the first left transistor PGA, the gate of the first right transistor TGA, the gate of the first right transistor PGB, and the gate of the second right transistor TGB.

Alternatively, in some other embodiments of this specification, the modulation signals received by the respective gates of the transistors may be provided by an internal control unit of the image sensor pixel circuit.

Based on this, it can be learned from the foregoing that a working time of the pixel circuit may include an exposure time and a readout time. Each light sensitive element 20 can perform optical-to-electrical conversion in the exposure time.

In this case, in a first time period P1 (shown in FIG. 5) in the exposure time, the gate GA1 of the first left transistor PGA in FIG. 4a receives the first left modulation signal MPGA, so that the first left transistor PGA is conducted. In addition, the gate GA2 of the second left transistor TGA receives the second left modulation signal MTGA, so that the second left transistor TGA is conducted.

When the first left transistor PGA and the second left transistor TGA are both conducted, carriers accumulated in the light sensitive element 20 are transmitted through the left transmission channel 30 (along a transmission route in a direction of a dashed line arrow in FIG. 6), and stored in the left storage capacitor CA.

It should be noted that, in FIG. 6, a vertical coordinate is an electric potential, and a horizontal coordinate is a relative position relationship between the gates of the transistors. Meanings of horizontal coordinates and vertical coordinates in figures similar to FIG. 6 in the following descriptions of this specification can be likewise obtained, and details are not described herein again.

In addition, the modulation signal is usually a square wave signal or a sine wave in this specification. For ease of description, the following provides all descriptions by using an example in which the modulation signal is a square wave. Therefore, when the gate of the transistor receives a modulation signal, so that the transistor is conducted. For example, the transistors are N-type transistors. That the gate GA1 of the first left transistor PGA receives the first left modulation signal MPGA, so that the first left transistor PGA is conducted means that when the gate GA1 of the first left transistor PGAreceives a high-level signal in the first left modulation signal MPGA, the first left transistor PGA is conducted.

On this basis, in some possible embodiments of this specification, an amplitude Vpga of the first left modulation signal MPGA may be equal to an amplitude Vtga of the second left modulation signal MTGA. In this case, as shown in FIG. 6, a gate conduction voltage of the first left transistor PGA and a gate conduction voltage of the second left transistor TGA are the same, and are both V0. In this case, when the first left modulation signal MPGA is received, so that the first left transistor PGA is conducted, electric potential distribution in the left transmission channel 30 is smooth.

In FIG. 6, gate voltages of the first right transistor PGB and the second right transistor TGB are Voff, and the first right transistor PGB and the second right transistor TGB are in a cut-off state.

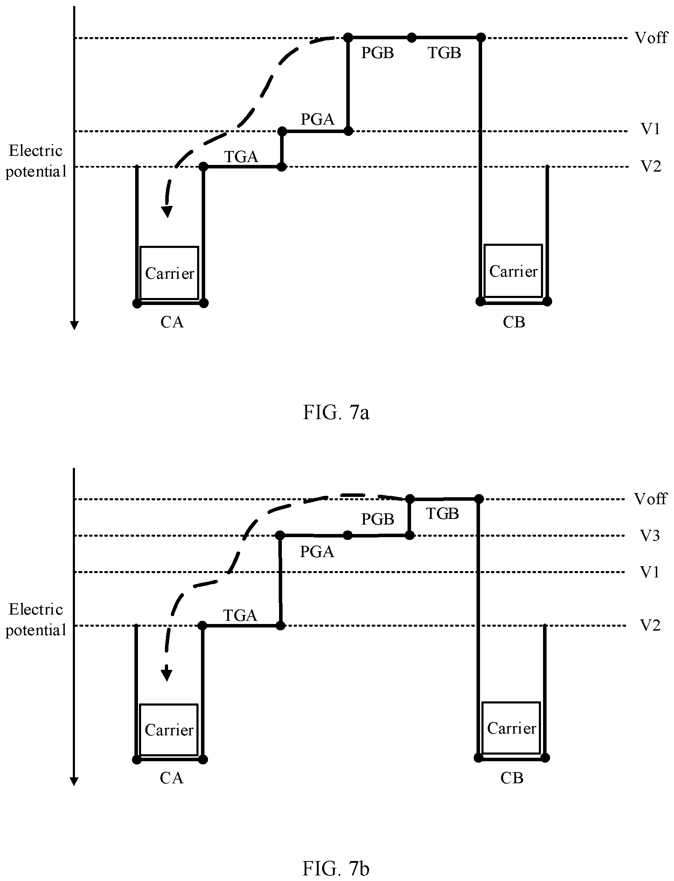

To improve efficiency of transmitting, through the left transmission channel 30, carriers accumulated in the light sensitive element, to improve a horizontal carrier modulation capability, in some other possible embodiments of this specification, an amplitude Vpga (shown in FIG. 5) of the first left modulation signal MPGA may be less than an amplitude Vtga of the second left modulation signal MTGA. In this case, as shown in FIG. 7a, a gate conduction voltage V1 of the first left transistor PGA is less than a gate conduction voltage V2 of the second left transistor TGA (in FIG. 7a, an electric potential direction is a conduction voltage increase trend of the gate of the transistor). In this way, after the first left transistor PGA and the second left transistor TGA are both conducted, electric potential distribution in the left transmission channel 30 can be steep, so that efficiency of horizontal carrier transmission is higher.

In FIG. 7a, gate voltages of the first right transistor PGB and the second right transistor TGB are Voff, and in this case, the first right transistor PGB and the second right transistor TGB are in a cut-off state.

In addition, as shown in FIG. 5, the first left modulation signal MPGA and the second left modulation signal MTGA each have a period of T. When the first left transistor PGA is coupled to the first end c of the light sensitive element 20, and the second left transistor TGA is coupled between the left storage capacitor CA and the first left transistor PGA, a phase of the second left modulation signal MTGA is delayed by a first preset time t1 relative to a phase of the first left modulation signal MPGA. In some embodiments, the first preset time t1 meets 0 < t1 ≤ T/2. In this way, a time in which the first left transistor PGA and the second left transistor TGA are both in a conducted state can be greater than or equal to T/2, thereby improving efficiency of transmitting a carrier through the left transmission channel 30.

In addition, in a second time period P2 (shown in FIG. 5) in the exposure time, the gate GB1 of the first right transistor PGB in FIG. 4a receives the first right modulation signal MPGB, so that the first right transistor PGB is conducted; and the gate GB2 of the second right transistor TGB receives a second right modulation signal MTGB, so that the second right transistor TGB is conducted.

Likewise, the first right modulation signal MPGB and the second right modulation signal MTGB each have a period of T. When the first right transistor PGB is coupled to the first end c of the light sensitive element 20, and the second right transistor TGB is coupled between the right storage capacitor CB and the first right transistor PGB, a phase of the second right modulation signal MTGB is delayed by one second preset time t2 relative to a phase of the first right modulation signal MPGB. The second preset time t2 meets 0 < t2 ≤ T/2. Therefore, a time in which the first right transistor PGB and the second right transistor TGB are both in a conducted state can be greater than or equal to T/2, thereby improving efficiency of transmitting a carrier through the right transmission channel.

In some embodiments of this specification, the first preset time t1 may be the same as the second preset time t2, to reduce a probability of an offset in the left transmission channel 30 or the right transmission channel 31, so that the left storage capacitor CA and the right storage capacitor CB have a same carrier absorption capability.

On this basis, in order that the left storage capacitor CA and the right storage capacitor CB can store carriers in a time division manner, the first left modulation signal MPGA and the first right modulation signal MPGB have a phase difference of 180°. In this way, theoretically, the first right transistor PGB can be cut off when the first left transistor PGA is conducted, or the first right transistor PGB can be conducted when the first left transistor PGA is cut off. Likewise, the second left modulation signal MTGA and the second right modulation signal MTGB have a phase difference of 180°. Therefore, theoretically, the second right transistor TGB is cut off (or conducted) when the second left transistor TGA is conducted (or cut off).

In addition, in order that the left storage capacitor CA and the right storage capacitor CB have a same carrier absorption capability, in some embodiments of this specification, an amplitude Vpga of the first left modulation signal MPGA is the same as an amplitude Vpgb of the first right modulation signal MPGB, and an amplitude Vtga of the second left modulation signal MTGA is the same as an amplitude Vtgb of the second right modulation signal MTGB.

On this basis, because conduction and cut-off of the transistor are not instantaneously completed, in actual working of the pixel circuit, in a stage shown in FIG. 7b, the first left transistor PGA is switched from conduction to cut-off, and in this case, the first left transistor PGA is not completely cut off. Simultaneously, the first right transistor PGB is switched from cut-off to conduction, and in this case, the first right transistor PGB is not completely conducted. In this time period, it is possible that a gate voltage of the first left transistor PGA to be cut off is the same as a gate voltage of the first right transistor PGB to be conducted. For example, the gate voltages are both equal to a voltage V3. In this case, a carrier can be transmitted to the first right transistor PGB through the first left transistor PGA.

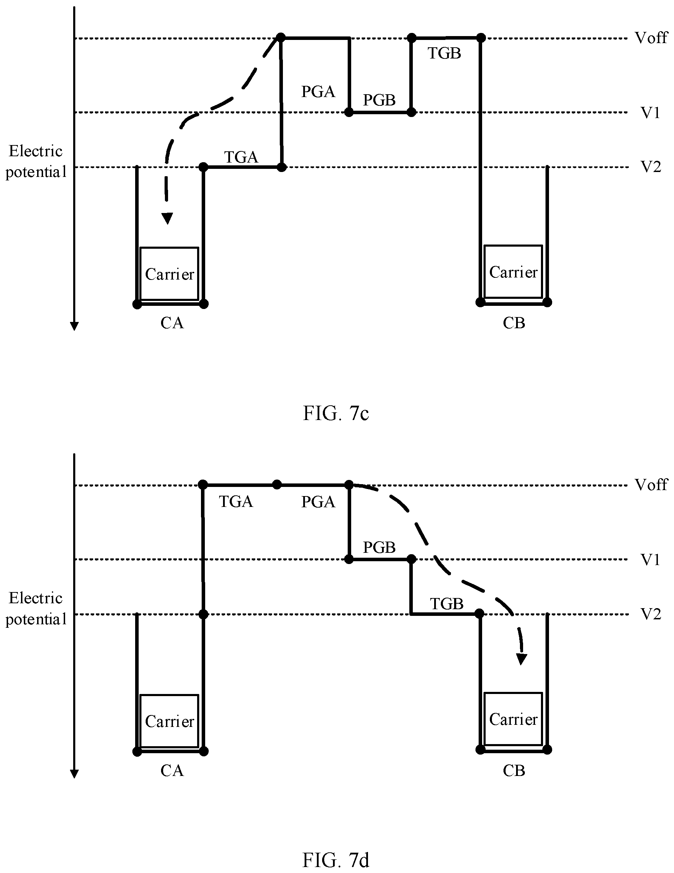

However, it can be learned from the foregoing that the phase of the second right modulation signal MTGB received by the gate of the second right transistor TGB is delayed by one second preset time t2 relative to the phase of the first right modulation signal MPGB received by the gate of the first right transistor PGB. Therefore, when the first right transistor PGB is not completely conducted (that is, when a gate voltage of the first right transistor PGB does not reach V2, but is a voltage V3) as shown in FIG. 7b, and when the first right transistor PGB is just completely conducted (that is, when a gate voltage of the first right transistor PGB reaches V2) as shown in FIG. 7c, a gate voltage of the second right transistor TGB is Voff, and the second right transistor TGB is not yet conducted.

In FIG. 7b and FIG. 7c, a gate voltage of the second left transistor TGA is V2, and the second left transistor TGA is in a conducted state.

In this way, a carrier transmitted, through the left transmission channel 30, to and stored in the left storage capacitor CA cannot flow back, through the second right transistor TGB, to the right storage capacitor CB coupled to the right transmission channel 31, so that a probability of horizontal carrier contention between the left storage capacitor CA and the right storage capacitor CB can be reduced. Therefore, a difference between a quantity of carriers actually captured in the left storage capacitor CA or the right storage capacitor CB and an expected value is reduced, thereby effectively improving MC.

Next, as shown in FIG. 7d, when the first right transistor PGB and the second right transistor TGB are both conducted, carriers accumulated in the light sensitive element 20 are transmitted through the right transmission channel 31 (along a transmission route in a direction of a dashed line arrow in FIG. 7d), and stored in the right storage capacitor CB.

In addition, as described above, an amplitude of the first right modulation signal MPGB may be less than or equal to an amplitude of the second right modulation signal MTGB.

Likewise, because the phase of the second left modulation signal MTGA is delayed by the first preset time t1 relative to the phase of the first left modulation signal MPGA, a carrier transmitted, through the right transmission channel 31, to and stored in the right storage capacitor CB cannot flow back, through the second left transistor TGA, to the left storage capacitor CA coupled to the left transmission channel 30, so that a probability of horizontal carrier contention between the left storage capacitor CA and the right storage capacitor CB can be reduced.

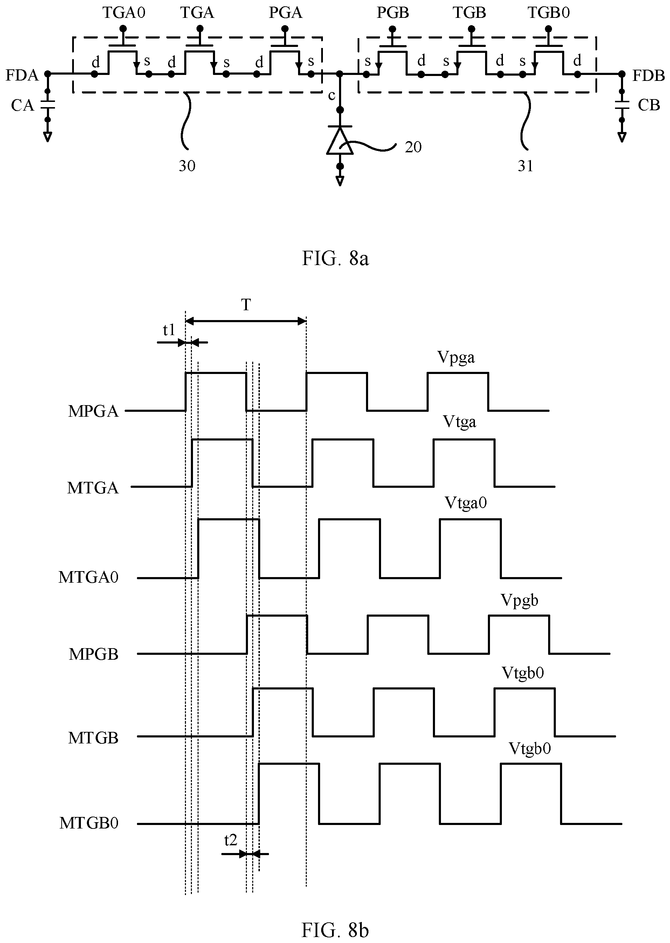

In addition, in some embodiments of this specification, as shown in FIG. 8a, the left transmission channel 30 further includes a third left transistor TGAO. The third left transistor TGAO may be coupled between the second left transistor TGA and the left storage capacitor CA. The right transmission channel 31 further includes a third right transistor TGBO. The third right transistor TGBO may be coupled between the second right transistor TGB and the right storage capacitor CB.

In this case, as shown in FIG. 8b (a sequence diagram of voltage signals applied to gates of the transistors in FIG. 8a), phases of the first left modulation signal MPGA, the second left modulation signal MTGA, and a third left modulation signal MTGA0 received by a gate of the third left transistor TGAO are sequentially delayed.

The first left modulation signal MPGA, the second left modulation signal MTGA, and the third left modulation signal MTGA0 may have a same delay time, for example, the delay time is the first preset time t1, or may have different delay times. This is not limited in this specification. Based on this, only after the first left transistor PGA is conducted, the second left transistor TGA and the third left transistor TGAO are sequentially conducted.

In this way, it can be learned from the foregoing that even though at a moment, a gate voltage of the first left transistor PGA is the same as a gate voltage of the first right transistor PGB, so that a carrier can be transmitted to the first left transistor PGA through the first right transistor PGB, because the third left transistor TGAO is in a cut-off state when the first left transistor PGA is not completely conducted, a carrier transmitted, through the right transmission channel 31, to and stored in the right storage capacitor CB cannot flow back, through the third left transistor TGAO, to the left storage capacitor CA coupled to the left transmission channel 30, thereby reducing horizontal carrier contention.

Likewise, as shown in FIG. 8b, phases of the first right modulation signal MPGB, the second right modulation signal MTGB, and a third right modulation signal MTGBO received by a gate of the third right transistor TGBO are sequentially delayed.

The first right modulation signal MPGB, the second right modulation signal MTGB, and the third right modulation signal MTGBO may have a same delay time, for example, the delay time is the second preset time t2, or may have different delay times. This is not limited in this specification. In this way, only after the first right transistor PGB is conducted, the second right transistor TGB and the third right transistor TGBO are sequentially conducted. Therefore, when the first right transistor PGB is not completely conducted, the third right transistor TGBO is in a cut-off state, thereby reducing horizontal carrier contention.

Based on this, in some embodiments of this specification, amplitudes (for example, Vpga, Vtga, and Vtga0 in FIG. 8b) of the first left modulation signal MPGA, the second left modulation signal MTGA, and the third left modulation signal MTGA0 are the same. In addition, amplitudes (for example, Vpgb0, Vtgb, and Vtgb0) of the first right modulation signal MPGB, the second right modulation signal MTGB, and the third right modulation signal MTGBO are the same.

Alternatively, it can be learned from the foregoing that, in order that electric potential distribution in the left transmission channel 30 is steep, so that efficiency of horizontal carrier transmission is higher, amplitudes of the first left modulation signal MPGA, the second left modulation signal MTGA, and the third left modulation signal MTGA0 are sequentially increased, that is, Vpga < Vtga < Vtga0 in FIG. 8b.

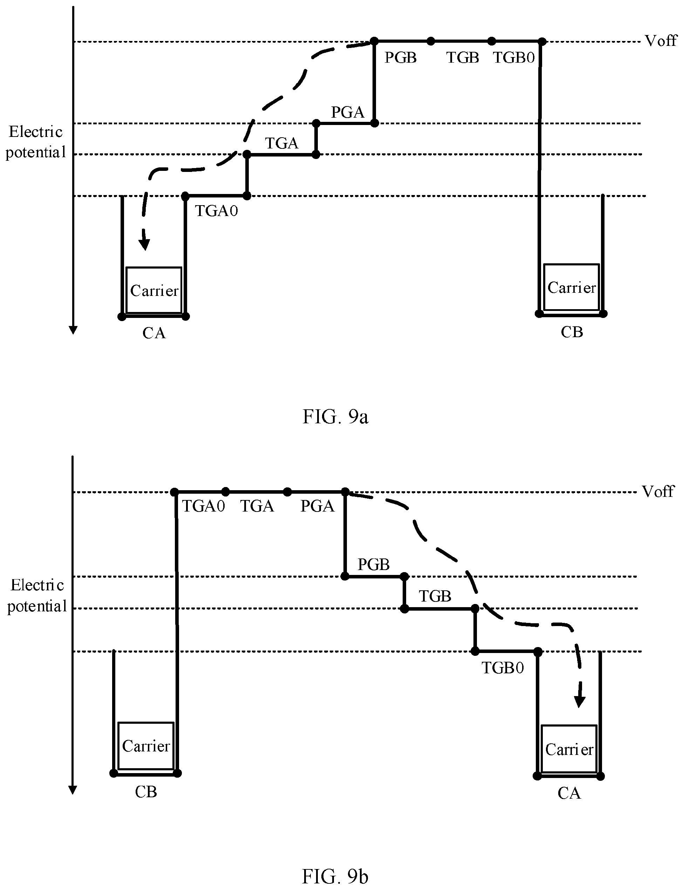

In this way, as shown in FIG. 9a, when the first left transistor PGA, the second left transistor TGA, and the third left transistor TGAO are all conducted, electric potential distribution in the left transmission channel 30 is steep, so that efficiency of transmitting a carrier along a dashed line through the first left transistor PGA, the second left transistor TGA, and the third left transistor TGAO is improved.

Likewise, in order that electric potential distribution in the right transmission channel 31 is steep, so that efficiency of horizontal carrier transmission is higher, amplitudes of the first right modulation signal MPGB, the second right modulation signal MTGB, and the third right modulation signal MTGBO are sequentially increased, that is, Vpgb < Vtgb < Vtgb0 in FIG. 8b.

In this way, as shown in FIG. 9b, when the first right transistor PGB, the second right transistor TGB, and the third right transistor TGBO are all conducted, electric potential distribution in the right transmission channel 31 is steep, so that efficiency of transmitting a carrier along a dashed line through the first right transistor PGB, the second right transistor TGB, and the third right transistor TGBO is improved.

It should be noted that conduction voltages of the transistors in FIG. 9a or FIG. 9b are not identified one by one, but are all greater than a cut-off voltage Voff of the transistor.

In addition, the foregoing provides descriptions by using an example in which the left transmission channel 30 includes the first left transistors PGA, the second left transistor TGA, and the third left transistor TGAO that are connected in series, and the right transmission channel 31 includes the first right transistor PGB, the second right transistor TGB, and the third right transistor TGBO that are connected in series. A quantity of transistors connected in series in the left transmission channel 30 and a quantity of transistors connected in series in the right transmission channel 31 are not limited in this specification. A control method and a transistor connection manner are the same as those described above, and details are not described herein again.

The gates of the third left transistor TGAO and the third right transistor TGBO may be coupled to the modulation signal end OP1 in the drive chip 02 shown in FIG. 1. The modulation signal end OP1 may be configured to provide the third left modulation signal MTGA0 or the third right modulation signal MTGBO.

It should be noted that, the foregoing provides descriptions by using an example in which the image sensor pixel circuit includes one left transmission channel and one right transmission channel. In some possible implementations of this specification, the image sensor pixel circuit includes a left transmission channel 30A and a right transmission channel 31A that are located on an upper part as shown in FIG. 4d (a top view of the image sensor pixel circuit). The left transmission channel 30A is coupled to a left storage capacitor CA1 in an upper left corner, and the right transmission channel 31A is coupled to a right storage capacitor CB1 in an upper right corner. In addition, the image sensor pixel circuit further includes a left transmission channel 30B and a right transmission channel 31B that are located in a lower part. The left transmission channel 30B is coupled to a left storage capacitor CA2 in a lower left corner, and the right transmission channel 31B is coupled to a right storage capacitor CB2 in a lower right corner.

Any one of the left transmission channel 30A and the left transmission channel 30B includes the foregoing first left transistor PGA and second left transistor TGA. As shown in FIG. 4d, a gate GA1 of the first left transistor PGA and a gate GA2 of the second left transistor TGA are disposed on the semiconductor substrate 201.

In addition, any one of the right transmission channel 31A and the right transmission channel 31B includes the foregoing first right transistor PGB and second right transistor TGB. As shown in FIG. 4d, a gate GB1 of the first right transistor PGB and a gate GB2 of the second right transistor TGB are disposed on the semiconductor substrate 201.

In this case, the left transmission channel 30A, the right transmission channel 31A, the left transmission channel 30B, and the right transmission channel 31B may sequentially transmit, in one integration period described above, carriers generated by the light sensitive element 20 to the storage capacitors respectively coupled to the left transmission channel 30A, the right transmission channel 31A, the left transmission channel 30B, and the right transmission channel 31B.

### Example 2

Same as the example 1, in this example, the gate GA1 of the first left transistor PGA receives a first left modulation signal MPGA shown in FIG. 5, and the gate GA2 of the second left transistor TGA receives a second left modulation signal MTGA; and the gate GB1 of the first right transistor PGB receives a first right modulation signal MPGB, and the gate GB2 of the second right transistor TGB receives a second right modulation signal MTGB.

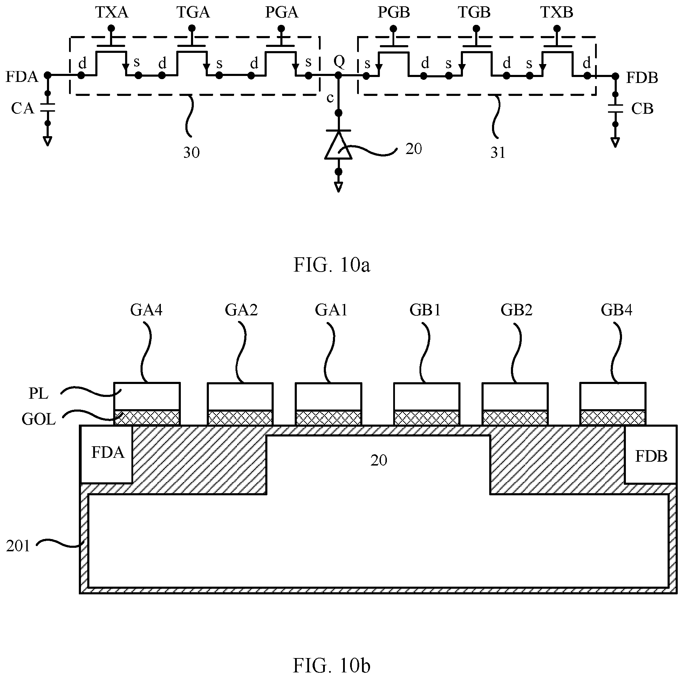

Different from the example 1, as shown in FIG. 10a, the left transmission channel 30 further includes a fourth left transistor TXA. The fourth left transistor TXA is connected in series with the first left transistor PGA and the second left transistor TGA. A gate of the fourth left transistor TXAreceives a left direct current signal. In this case, in the foregoing first time period P1 and second time period P2, the fourth left transistor TXA can be always in a conducted state.

In addition, the right transmission channel 31 further includes a fourth right transistor TXB. The fourth right transistor TXB is connected in series with the first right transistor PGB and the second right transistor TGB. A gate of the fourth right transistor TXB receives a right direct current signal. In this case, the fourth transistor TXB can be always in a conducted state in the first time period P1 in which the left transmission channel 30 transmits a carrier and the second time period P2 in which the right transmission channel 31 transmits a carrier.

As shown in FIG. 1, the drive chip 02 may further include a direct current signal end OP2. In some embodiments of this specification, the gate of the fourth left transistor TXA and the gate of the fourth right transistor TXB may be coupled to the direct current signal end OP2. The direct current signal end OP2 can respectively provide the left direct current signal and the right direct current signal for the gate of the fourth left transistor TXA and the gate of the fourth right transistor TXB.

Alternatively, in some other embodiments of this specification, the direct current signals received by the respective gates of the transistors may be provided by an internal control unit of the image sensor pixel circuit.

Based on this, as shown in FIG. 10b, the gate GA4 of the fourth left transistor TXA and the gate GB4 of the fourth right transistor TXB are located on the semiconductor substrate 201. Likewise, it can be learned that, in order that the left storage capacitor CA and the right storage capacitor CB have a same capability of absorbing carriers accumulated in the light sensitive element 20, the gate GA4 of the fourth left transistor TXA and the gate GB4 of the fourth right transistor TXB are symmetrically disposed relative to a coupling point Q (shown in FIG. 10a) of the left transmission channel 30 and the right transmission channel 31.

In some embodiments of this specification, as shown in FIG. 10a, the fourth left transistor TXA is coupled to a first electrode of the left storage capacitor CA(that is, an upper electrode plate of the left storage capacitor CA in FIG. 10a). The second left transistor TGA is coupled between the first left transistor PGA and the fourth left transistor TXA. In addition, the fourth right transistor TXB is coupled to a first electrode of the right storage capacitor CB (that is, an upper electrode plate of the right storage capacitor CB in FIG. 10a). The second right transistor TGB is coupled between the first right transistor PGB and the fourth right transistor TXB.

In this case, in a possible implementation, a voltage value of the left direct current signal received by the gate of the fourth left transistor TXA is the same as an amplitude Vtga of the second left modulation signal MTGA received by the gate of the second left transistor TGA. In this case, the fourth left transistor TXA and the second left transistor TGA have a same conduction voltage. Therefore, electric potential distribution in the left transmission channel 30 is smooth.

In addition, a voltage value of the right direct current signal received by the gate of the fourth right transistor TXB is the same as an amplitude Vtgb of the second right modulation signal MTGB received by the gate of the second right transistor TGB. In this case, the fourth right transistor TXB and the second right transistor TGB have a same conduction voltage. Therefore, electric potential distribution in the right transmission channel 31 is smooth.

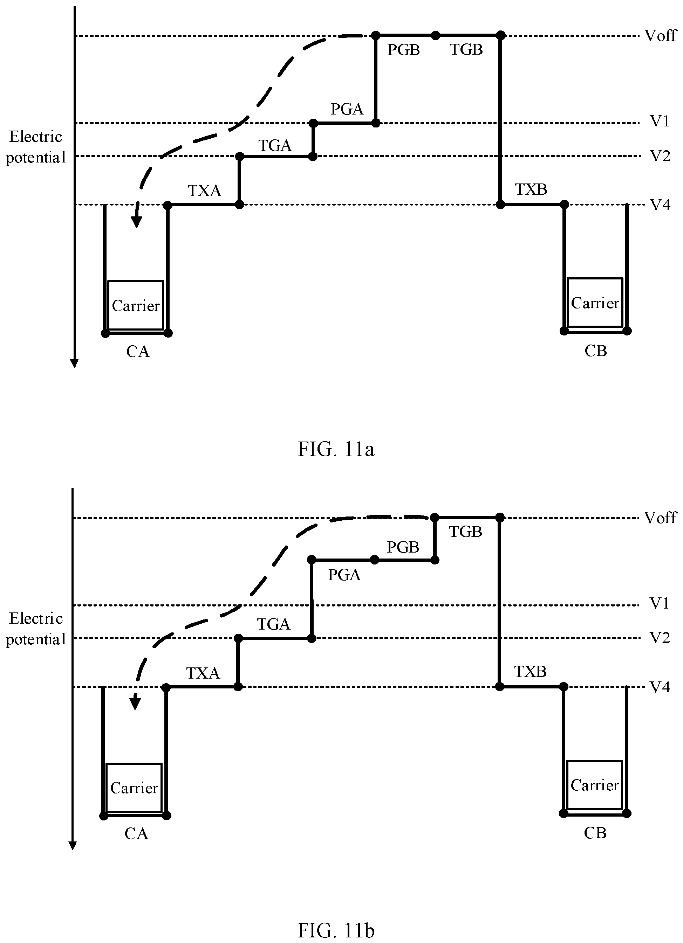

To increase steepness degrees of electric potential distribution in the left transmission channel 30 and the right transmission channel 31, to improve efficiency of horizontal carrier transmission, in another possible implementation, a voltage value of the left direct current signal is greater than an amplitude Vtga of the second left modulation signal MTGA. In this case, as shown in FIG. 11a, a conduction voltage V4 of the fourth left transistor TXA is greater than a conduction voltage V2 of the second left transistor TGA.

In this way, as shown in FIG. 11a, when the first left transistor PGA, the second left transistor TGA, and the fourth left transistor TXA are all conducted, electric potential distribution in the left transmission channel 30 is steep, so that efficiency of transmitting a carrier along a dashed line through the first left transistor PGA, the second left transistor TGA, and the fourth left transistor TXA is improved. In this case, gate voltages of the first right transistor PGB and the second right transistor TGB are cut-off voltages Voff, and the first right transistor PGB and the second right transistor TGB are in a cut-off state.

Next, when a phase of the second right modulation signal MTGB received by the gate of the second right transistor TGB is delayed by a second preset time t2 relative to a phase of the first right modulation signal MPGB received by the gate of the first right transistor PGB, the second right transistor TGB is conducted later than the first right transistor PGB.

In this case, as shown in FIG. 11b, when the first left transistor PGA is not completely turned off and the first right transistor PGB is not completely turned on, a carrier in the left storage capacitor CA is not transmitted to the right storage capacitor CB through the second right transistor TGB.

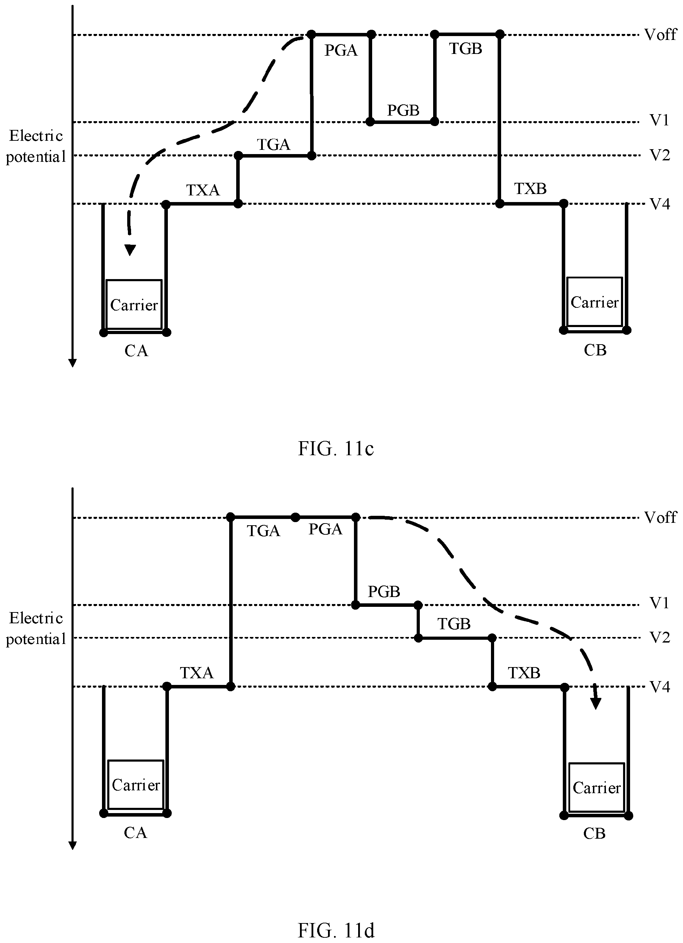

In addition, as shown in FIG. 11c, after the first left transistor PGA is completely turned off, the first right transistor PGB is completely turned on, but the second right transistor TGB is still in a cut-off state. In this case, a carrier in the left storage capacitor CA is not transmitted to the right storage capacitor CB through the second right transistor TGB.

Next, as shown in FIG. 11d, the first right transistor PGB, the second right transistor TGB, and the fourth right transistor TXB are all conducted. In this case, when a voltage of the left direct signal input to the fourth right transistor TXB is greater than an amplitude Vtgb of the second right modulation signal MTGB input to the second right transistor TGB, a conduction voltage V4 of the fourth right transistor TXB is greater than a conduction voltage V2 of the second right transistor TGB.

In this way, electric potential distribution in the right transmission channel 31 is steep, so that efficiency of transmitting a carrier along a dashed line through the first right transistor PGB, the second right transistor TGB, and the fourth right transistor TXB is improved. In this case, gate voltages of the first left transistor PGA and the second left transistor TGA are cut-off voltages Voff, and the first left transistor PGA and the second left transistor TGA are in a cut-off state.

It should be noted that the foregoing provides descriptions by using an example in which the left transmission channel 30 includes one fourth left transistor TXA, and the right transmission channel 31 includes one fourth right transistor TXB. In some other embodiments of this specification, the left transmission channel 30 may include at least two fourth left transistors TXA connected in series, and the right transmission channel 31 may include at least two fourth right transistors TXB connected in series. A transistor control method is the same as that described above, and details are not described herein again.

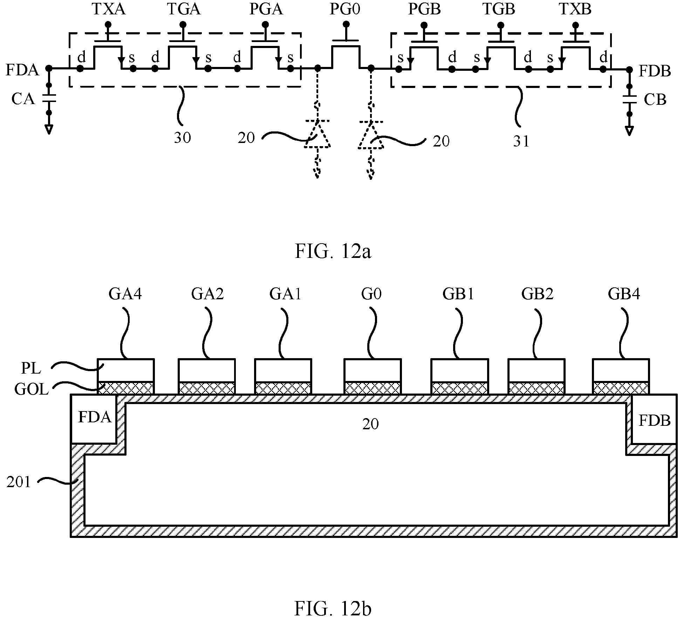

On this basis, the pixel circuit 203 further includes a fifth transistor PG0 shown in FIG. 12a. The fifth transistor PG0 is coupled between the left transmission channel 30 and the right transmission channel 31. As shown in FIG. 12b, the gate GA1 of the first left transistor PGA, the gate GB1 of the first right transistor PGB, and a gate G0 of the fifth transistor PG0 are located on the semiconductor substrate 201. Likewise, it can be learned that, in order that the left storage capacitor CA and the right storage capacitor CB have a same capability of absorbing carriers accumulated in the light sensitive element 20, the gate GA1 of the first left transistor PGA and the gate GB1 of the first right transistor PGB are symmetrically disposed relative to the gate G0 of the fifth transistor PG0.

It should be noted that the gate G0 of the fifth transistor PG0 is located at the coupling point O of the left transmission channel 30 and right transmission channel 31.

In addition, the gate of the fifth transistor PG0 receives a fifth direct current signal. In this case, the fifth transistor PG0 can be always in a conducted state in the first time period P1 in which the left transmission channel 30 transmits a carrier and the second time period P2 in which the right transmission channel 31 transmits a carrier.

The gate of the fifth transistor PG0 may be coupled to the direct current signal end OP2 in the drive chip 02 in FIG. 1, so that the fifth direct current signal can be provided for the gate of the fifth transistor PG0 by the direct current signal end OP2.

Based on this, two dashed-line light sensitive elements 20 depicted in FIG. 12a represent two coupling states of one light sensitive element 20 in the pixel circuit. In this case, the fifth transistor PG0 is a transistor that can be bidirectionally conducted. The fifth transistor PG0 is in the conducted state in both the first time period P1 and the second time period P2.

Therefore, when the transistors in the left transmission channel 30 are conducted, it is equivalent that the light sensitive element 20 is coupled to an electrode that is of PG0 and that is close to the right transmission channel 31, so that charges accumulated in the light sensitive element 20 can be transmitted to the left transmission channel 30 through the fifth transistor PG0, and finally stored in the left storage capacitor CA. Alternatively, when the transistors in the right transmission channel 31 are conducted, it is equivalent that the light sensitive element 20 is coupled to an electrode that is of PG0 and that is close to the left transmission channel 30, so that charges accumulated in the light sensitive element 20 can be transmitted to the right transmission channel 31 through the fifth transistor PG0, and finally stored in the right storage capacitor CB.

As described above, a voltage value of the fifth direct current signal may be the same as an amplitude Vpga of the first left modulation signal MPGA input to the gate of the first left transistor PGA and an amplitude Vpgb of the first right modulation signal MPGB input to the gate of the first right transistor PGB.

Alternatively, it can be learned from the foregoing that, in order that electric potential distribution in the left transmission channel 30 is steep, so that efficiency of horizontal carrier transmission is higher, a voltage value of the fifth direct current signal is less than an amplitude Vpga of the first left modulation signal MPGA of the gate of the first left transistor PGA.

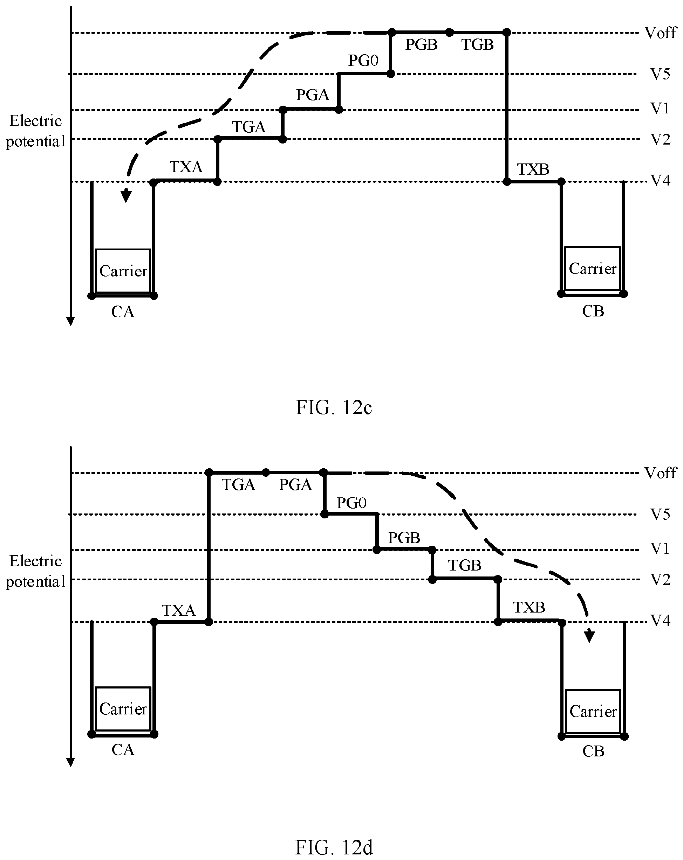

In this case, as shown in FIG. 12c, when the fifth transistor PG0, the first left transistor PGA, the second left transistor TGA, and the fourth left transistor TXA are conducted, conduction voltages of the fifth transistor PG0, the first left transistor PGA, the second left transistor TGA, and the fourth left transistor TXA are sequentially increased, that is, V5 < V1 < V2 < V4. In this case, electric potential distribution in the left transmission channel 30 is steep, so that efficiency of transmitting a carrier along a dashed line through the fifth transistor PG0, the first left transistor PGA, the second left transistor TGA, and the fourth left transistor TXA is improved.

Likewise, as shown in FIG. 12d, when the fifth transistor PG0, the first right transistor PGB, the second right transistor TGB, and the fourth right transistor TXB are conducted, conduction voltages of the fifth transistor PG0, the first right transistor PGB, the second right transistor TGB, and the fourth right transistor TXB are sequentially increased, that is, V5 < V1 < V2 < V4. In this case, electric potential distribution in the left transmission channel 30 is steep, so that efficiency of transmitting a carrier along a dashed line through the fifth transistor PG0, the first right transistor PGB, the second right transistor TGB, and the fourth right transistor TXB is improved.

It should be noted that the foregoing provides descriptions by using an example in which the pixel circuit 203 includes one fifth transistor PG0. In some other embodiments of this specification, the pixel circuit 203 may include at least two fifth transistors PG0 connected in series.

In this case, when the pixel circuit 203 includes fifth transistors PG0 whose quantity is an even number, a gate of a fifth transistor PG0 close to the left transmission channel 30 and a gate of a fifth transistor PG0 close to the right transmission channel are symmetrically disposed relative to the coupling point Q of the left transmission channel 30 and the right transmission channel 31.

Alternatively, when the pixel circuit 203 includes fifth transistors PG0 whose quantity is an odd number, a gate of a fifth transistor PG0 is located at the coupling point Q of the left transmission channel 30 and the right transmission channel 31, and a gate of a fifth transistor PG0 close to the left transmission channel 30 and a gate of a fifth transistor PG0 close to the right transmission channel in a plurality of remaining fifth transistors PG0 are symmetrically disposed relative to the gate of the fifth transistor PG0 at the coupling point Q.

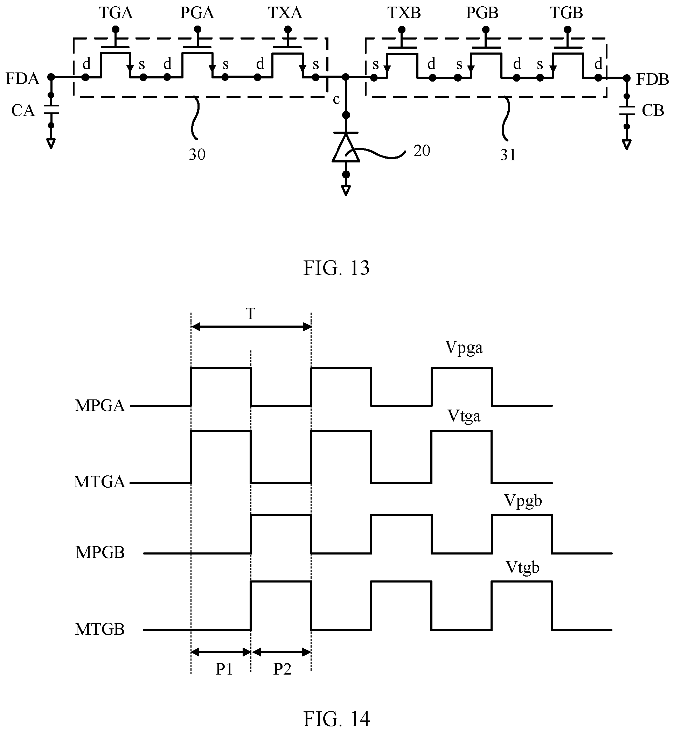

In addition, when the left transmission channel 30 further includes the fourth left transistor TXA, and the right transmission channel 31 includes the fourth right transistor TXB, in some other embodiments of this specification, as shown in FIG. 13, the second left transistor TGA is coupled to a first electrode of the left storage capacitor CA. The first left transistor PGA is coupled between the second left transistor TGA and the fourth left transistor TXA. The second right transistor TGB is coupled to a first electrode of the right storage capacitor CB. The first right transistor PGB is coupled between the second right transistor TGB and the fourth right transistor TXB. In this case, the fourth left transistor TXA and the fourth right transistor TXB in FIG. 13 may be equivalent to a solution in which the pixel circuit 203 includes two fifth transistors PG0 connected in series.

Likewise, in some possible implementations, a voltage value of the left direct current signal received by the gate of the fourth left transistor TXA may be the same as an amplitude Vpga of the first left modulation signal MPGA received by the gate of the first left transistor PGA, and a voltage value of the right direct current signal received by the gate of the fourth right transistor TXB may be the same as an amplitude Vpgb of the first right modulation signal MPGB received by the gate of the first right transistor PGB.

Alternatively, likewise, it can be learned that, in order that electric potential distribution in the left transmission channel 30 and the right transmission channel 31 is steep, a voltage value of the left direct current signal received by the gate of the fourth left transistor TXA may be less than an amplitude Vpga of the first left modulation signal MPGA received by the gate of the first left transistor PGA, and a voltage value of the right direct current signal received by the gate of the fourth right transistor TXB may be less than an amplitude Vpgb of the first right modulation signal MPGB received by the gate of the first right transistor PGB.

### Example 3

Same as the example 1 and the example 2, in this example, as shown in FIG. 4b, the left transmission channel 30 may include the first left transistor PGA and the second left transistor TGA, and the right transmission channel 31 may include the first right transistor PGB and the second right transistor TGB.

In addition, the second left transistor TGA is coupled between the left storage capacitor CA and the first left transistor PGA. The gate of the first left transistor PGA receives a first left modulation signal MPGA shown in FIG. 14, and the gate of the second left transistor TGA receives a second left modulation signal MTGA. The second right transistor TGB is coupled between the right storage capacitor CB and the first right transistor PGB. The gate of the first right transistor PGB receives a first right modulation signal MPGB, and the gate of the second right transistor TGB receives a second right modulation signal MPGB.

Different from the example 1 and the example 2, in this example, as shown in FIG. 14 (another sequence diagram of voltage signals applied to the gates of the transistors in FIG. 4b), the first left modulation signal MPGA and the second left modulation signal MTGA each have a period of T, and have a same phase. An amplitude Vpga of the first left modulation signal MPGA is less than an amplitude Vtga of the second left modulation signal MTGA, that is, Vpag < Vtga.

In this way, when the first left transistor PGA and the second left transistor TGA are both conducted, as shown in FIG. 7a, a conduction voltage V2 of the second left transistor TGA is greater than a conduction voltage V1 of the first left transistor PGA, so that electric potential distribution in the left transmission channel 30 can be steep.

In addition, as shown in FIG. 14, the first right modulation signal MPGB and the second right modulation signal MTGB each have a period of T, and have a same phase. An amplitude Vpgb of the first right modulation signal MPGB is less than an amplitude Vtgb of the second right modulation signal MTGB.

In this way, when the first right transistor PGB and the second right transistor TGB are both conducted, as shown in FIG. 7d, a conduction voltage V2 of the second right transistor TGB is greater than a conduction voltage V1 of the first right transistor PGB, so that electric potential distribution in the right transmission channel 31 can be steep.

As described above, in order that the left storage capacitor CA and the right storage capacitor CB can store carriers in a time division manner, as shown in FIG. 14, the first left modulation signal MPGA and the first right modulation signal MPGB have a phase difference of 180°, and the second left modulation signal MTGA and the second right modulation signal MTGB have a phase difference of 180°.

In addition, in some possible implementations of this example, the left transmission channel 30 may further include a third left transistor TGAO shown in FIG. 8a, and the right transmission channel 31 may further include a third right transistor TGBO.

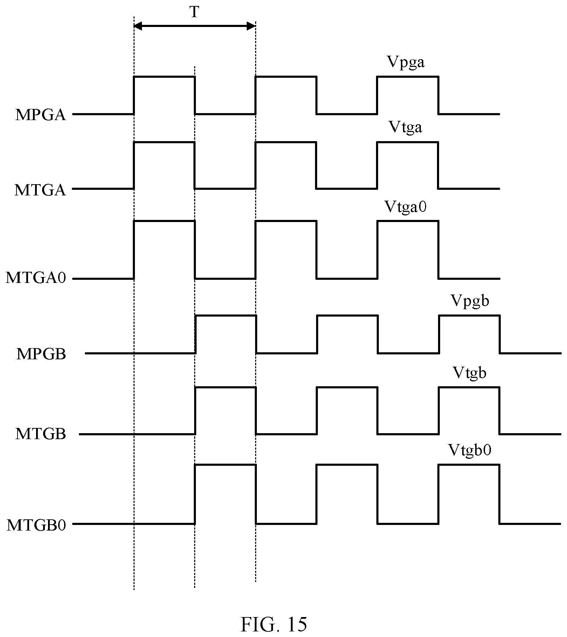

In this case, phases of the first left modulation signal MPGA, the second left modulation signal MTGA, and a third left modulation signal MTGA0 are equal as shown in FIG. 15 (another sequence diagram of voltage signals applied to the gates of the transistors in FIG. 8a). In addition, as described above, in order that electric potential distribution in the left transmission channel 30 is steep, so that efficiency of horizontal carrier transmission is higher, amplitudes of the first left modulation signal MPGA, the second left modulation signal MTGA, and the third left modulation signal MTGA0 are sequentially increased, that is, Vpga < Vtga < Vtga0.

Likewise, phases of the first right modulation signal MPGB, the second right modulation signal MTGB, and a third right modulation signal MTGBO are equal as shown in FIG. 15. In addition, as described above, in order that electric potential distribution in the right transmission channel 31 is steep, so that efficiency of horizontal carrier transmission is higher, amplitudes of the first right modulation signal MPGB, the second right modulation signal MTGB, and the third right modulation signal MTGBO are sequentially increased, that is, Vpgb < Vtgb < Vtgb0.

In implementations according to example 3, as shown in FIG. 10a, the left transmission channel 30 further includes a fourth left transistor TXA, and a gate of the fourth left transistor TXA receives a left direct current signal; and the right transmission channel 31 further includes a fourth right transistor TXB, and a gate of the fourth right transistor TXB receives a right direct current signal.

As described above, in order that the left storage capacitor CA and the right storage capacitor CB have a same capability of absorbing carriers accumulated in the light sensitive element 20, the gate GA4 of the fourth left transistor TXA and the gate GB4 of the fourth right transistor TXB are symmetrically disposed relative to a coupling point Q (shown in FIG. 10a) of the left transmission channel 30 and the right transmission channel 31.

Likewise, it can be learned that, as shown in FIG. 10a, when the second left transistor TGA is coupled between the first left transistor PGA and the fourth left transistor TXA, a voltage value of the left direct current signal is greater than or equal to an amplitude Vtag of the second left modulation signal received by the gate of the second left transistor TGA. When the second right transistor TGB is coupled between the first right transistor PGB and the fourth right transistor TXB, a voltage value of the right direct current signal is greater than or equal to an amplitude Vtgb of the second right modulation signal MTGB received by the gate of the second right transistor TGB. A setting manner and technical effects of the left direct current signal and the right direct current signal are the same as those described above, and details are not described herein again.

On this basis, in this example, the pixel circuit may further include a fifth transistor PG0 shown in FIG. 12a. The fifth transistor PG0 is coupled between the left transmission channel 30 and the right transmission channel 31. A setting manner of a fifth direct current signal received by the fifth transistor PG0 is the same as that described above, and details are not described herein again.

Based on this, as described above, in order that the left storage capacitor CA and the right storage capacitor CB have a same capability of absorbing carriers accumulated in the light sensitive element 20, the gate GA1 of the first left transistor PGA and the gate GB1 of the first right transistor PGB are symmetrically disposed relative to a gate G0 of the fifth transistor PG0.

Alternatively, in some other possible implementations of this specification, as shown in FIG. 13, when the left transmission channel 30 includes a fourth left transistor TXA, and the right transmission channel 31 includes a fourth right transistor TXB, the second left transistor TGA is coupled to a first electrode of the left storage capacitor CA, the first left transistor PGA is coupled between the second left transistor TGA and the fourth left transistor TXA, the second right transistor TGB is coupled to a first electrode of the right storage capacitor CB, and the first right transistor PGB is coupled between the second right transistor TGB and the fourth right transistor TXB.

As described above, a voltage value of a left direct current signal received by a gate of the fourth left transistor TXA is less than or equal to an amplitude Vpga of the first left modulation signal MPGA received by the gate of the first left transistor PGA, and a voltage value of a right direct current signal received by a gate of the fourth right transistor TXB is less than or equal to an amplitude Vpgb of the first right modulation signal MPGB received by the gate of the first right transistor PGB. A setting manner and technical effects of the left direct current signal and the right direct current signal are the same as those described above, and details are not described herein again.

The foregoing descriptions are merely specific implementations of this specification, but are not intended to limit the protection scope of this specification.

## Claims

1. An image sensor pixel circuit (203), comprising: light sensitive element (20);
a left transmission channel (30) coupled to a first end (c) of the light sensitive element (20), wherein the left transmission channel (30) comprises a first left transistor (PGA) and a second left transistor (TGA) that are connected in series, a gate (GA1) of the first left transistor receives a first left modulation signal (MPGA), a gate (GA2) of the second left transistor receives a second left modulation signal (MTGA), the first left modulation signal (MPGA) and the second left modulation signal (MTGA) each have a period of T, and the second left modulation signal (MTGA) and the first left modulation signal (MPGA) have a phase difference; and a right transmission channel (31) coupled to the first end (c) of the light sensitive element, wherein the right transmission channel (31) comprises a first right transistor (PGB) and a second right transistor (TGB) that are connected in series, a gate (GB1) of the first right transistor receives a first right modulation signal (MPGB), a gate (GB2) of the second right transistor receives a second right modulation signal (MTGB), the first right modulation signal (MPGB) and the second right modulation signal (MTGB) each have a period of T, and the second right modulation signal (MTGB) and the first right modulation signal (MPGB) have a phase difference; wherein
the left transmission channel (30) further comprises a fourth left transistor (TXA), the fourth left transistor (TXA) is connected in series with the first left transistor (PGA) and the second left transistor (TGA), and a gate (GA4) of the fourth left transistor (TXA) receives a left direct current signal; and
the right transmission channel (31) further comprises a fourth right transistor (TXB), the fourth right transistor (TXB) is connected in series with the first right transistor (PGB) and the second right transistor (TGB), and a gate (GB4) of the fourth right transistor receives a right direct current signal;
wherein the image sensor pixel circuit further comprises:
a left storage capacitor, located at an end that is of the left transmission channel; and
a right storage capacitor, located at an end that is of the right transmission channel, wherein
the first left transistor is coupled to the first end of the light sensitive element, and the second left transistor is coupled between the first left transistor and the left storage capacitor; and the first right transistor is coupled to the first end of the light sensitive element, and the second right transistor is coupled between the first right transistor and the right storage capacitor;
a phase of the second left modulation signal is delayed by a first preset time t1 relative to a phase of the first left modulation signal, and the first preset time t1 meets 0 < t1 ≤ T/2; and
a phase of the second right modulation signal is delayed by a second preset time t2 relative to a phase of the first right modulation signal, and the second preset time t2 meets 0 < t2 ≤ T/2;
wherein
the fourth left transistor is coupled to a first electrode of the left storage capacitor, the second left transistor is coupled between the first left transistor and the fourth left transistor, and a voltage value of the left direct current signal is greater than or equal to an amplitude of the second left modulation signal; and
the fourth right transistor is coupled to a first electrode of the right storage capacitor, the second right transistor is coupled between the first right transistor and the fourth right transistor, and a voltage value of the right direct current signal is greater than or equal to an amplitude of the second right modulation signal.

2. The image sensor pixel circuit according to any one of claim 1, wherein the image sensor pixel circuit further comprises a fifth transistor, wherein
the fifth transistor is coupled between the left transmission channel and the right transmission channel, a gate of the fifth transistor receives a fifth direct current signal, and a voltage value of the fifth direct current signal is less than or equal to an amplitude of the first left modulation signal, or is less than or equal to an amplitude of the first right modulation signal.

3. An image sensor pixel circuit (203), comprising: light sensitive element (20);
a left transmission channel (30) coupled to a first end (c) of the light sensitive element (20), wherein the left transmission channel (30) comprises a first left transistor (PGA) and a second left transistor (TGA) that are connected in series, a gate (GA1) of the first left transistor receives a first left modulation signal (MPGA), a gate (GA2) of the second left transistor receives a second left modulation signal (MTGA), the first left modulation signal (MPGA) and the second left modulation signal (MTGA) each have a period of T, and the second left modulation signal (MTGA) and the first left modulation signal (MPGA) have a phase difference; and a right transmission channel (31) coupled to the first end (c) of the light sensitive element, wherein the right transmission channel (31) comprises a first right transistor (PGB) and a second right transistor (TGB) that are connected in series, a gate (GB1) of the first right transistor receives a first right modulation signal (MPGB), a gate (GB2) of the second right transistor receives a second right modulation signal (MTGB), the first right modulation signal (MPGB) and the second right modulation signal (MTGB) each have a period of T, and the second right modulation signal (MTGB) and the first right modulation signal (MPGB) have a phase difference; wherein
the left transmission channel (30) further comprises a fourth left transistor (TXA), the fourth left transistor (TXA) is connected in series with the first left transistor (PGA) and the second left transistor (TGA), and a gate (GA4) of the fourth left transistor (TXA) receives a left direct current signal; and
the right transmission channel (31) further comprises a fourth right transistor (TXB), the fourth right transistor (TXB) is connected in series with the first right transistor (PGB) and the second right transistor (TGB), and a gate (GB4) of the fourth right transistor receives a right direct current signal;
wherein the image sensor pixel circuit further comprises:
a left storage capacitor, located at an end that is of the left transmission channel; and
a right storage capacitor, located at an end that is of the right transmission channel, wherein
the first left transistor is coupled to the first end of the light sensitive element, and the second left transistor is coupled between the first left transistor and the left storage capacitor; and the first right transistor is coupled to the first end of the light sensitive element, and the second right transistor is coupled between the first right transistor and the right storage capacitor;
a phase of the second left modulation signal is delayed by a first preset time t1 relative to a phase of the first left modulation signal, and the first preset time t1 meets 0 < t1 ≤ T/2; and
a phase of the second right modulation signal is delayed by a second preset time t2 relative to a phase of the first right modulation signal, and the second preset time t2 meets 0 < t2 ≤ T/2;
wherein
the second left transistor is coupled to a first electrode of the left storage capacitor, the first left transistor is coupled between the second left transistor and the fourth left transistor, and a voltage value of the left direct current signal is less than or equal to an amplitude of the first left modulation signal; and
the second right transistor is coupled to a first electrode of the right storage capacitor, the first right transistor is coupled between the second right transistor and the fourth right transistor, and a voltage value of the right direct current signal is less than or equal to an amplitude of the first right modulation signal.

4. A method for controlling an image sensor pixel circuit (203), wherein the image sensor pixel circuit comprises a light sensitive element (20), and a left transmission channel (30) and a right transmission channel (31) that are separately coupled to a first end (c) of the light sensitive element (20), wherein the left transmission channel comprises a first left transistor (PGA) and a second left transistor (TGA) that are connected in series, and the right transmission channel comprises a first right transistor (PGB) and a second right transistor (TGB) that are connected in series, wherein
the left transmission channel (30) further comprises a fourth left transistor (TXA), the fourth left transistor (TXA) is connected in series with the first left transistor (PGA) and the second left transistor (TGA); and
the right transmission channel (31) further comprises a fourth right transistor (TXB), the fourth right transistor (TXB) is connected in series with the first right transistor (PGB) and the second right transistor (TGB);
wherein the image sensor pixel circuit further comprises a left storage capacitor and a right storage capacitor, wherein the left storage capacitor is located at an end that is of the left transmission channel, and the right storage capacitor is located at an end that is of the right transmission; the first left transistor is coupled to the first end of the light sensitive element, and the second left transistor is coupled between the first left transistor and the left storage capacitor; and the first right transistor is coupled to the first end of the light sensitive element, and the second right transistor is coupled between the first right transistor and the right storage capacitor;
a phase of the second left modulation signal is delayed by a first preset time t1 relative to a phase of the first left modulation signal, and the first preset time t1 meets 0 < t1 ≤ T/2; and
a phase of the second right modulation signal is delayed by a second preset time t2 relative to a phase of the first right modulation signal, and the second preset time t2 meets 0 < t2 ≤ T/2;
wherein the fourth left transistor is coupled to a first electrode of the left storage capacitor, the second left transistor is coupled between the first left transistor and the fourth left transistor; and the fourth right transistor is coupled to a first electrode of the right storage capacitor, the second right transistor is coupled between the first right transistor and the fourth right transistor; and
the method comprises:
receiving, by a gate (GA1) of the first left transistor (PGA), a first left modulation signal (MPGA), so that the first left transistor (PGA) is conducted; and receiving, by a gate (GA2) of the second left transistor (TGA), a second left modulation signal (MTGA), so that the second left transistor (TGA) is conducted, wherein
the first left modulation signal (MPGA) and the second left modulation signal (MTGA) each have a period of T, and the second left modulation signal (MTGA) and the first left modulation signal (MPGA) have a phase difference;
receiving, by a gate (GB1) of the first right transistor (PGB), a first right modulation signal (MPGB), so that the first right transistor (PGB) is conducted; and receiving, by a gate (GB2) of the second right transistor (TGB), a second right modulation signal (MTGB), so that the second right transistor (TGB) is conducted, wherein
the first right modulation signal (MPGB) and the second right modulation signal (MTGB) each have a period of T, and the second right modulation signal (MTGB) and the first right modulation signal (MPGB) have a phase difference;
receiving, by a gate (GA4) of the fourth left transistor (TXA), a left direct current signal, a voltage value of the left direct current signal is greater than or equal to an amplitude of the second left modulation signal; and
receiving, by a gate (GB4) of the fourth right transistor (TXB), a right direct current signal, a voltage value of the right direct current signal is greater than or equal to an amplitude of the second right modulation signal.

5. A method for controlling an image sensor pixel circuit (203), wherein the image sensor pixel circuit comprises a light sensitive element (20), and a left transmission channel (30) and a right transmission channel (31) that are separately coupled to a first end (c) of the light sensitive element (20), wherein the left transmission channel comprises a first left transistor (PGA) and a second left transistor (TGA) that are connected in series, and the right transmission channel comprises a first right transistor (PGB) and a second right transistor (TGB) that are connected in series, wherein
the left transmission channel (30) further comprises a fourth left transistor (TXA), the fourth left transistor (TXA) is connected in series with the first left transistor (PGA) and the second left transistor (TGA); and
the right transmission channel (31) further comprises a fourth right transistor (TXB), the fourth right transistor (TXB) is connected in series with the first right transistor (PGB) and the second right transistor (TGB);
wherein the image sensor pixel circuit further comprises a left storage capacitor and a right storage capacitor, wherein the left storage capacitor is located at an end that is of the left transmission channel, and the right storage capacitor is located at an end that is of the right transmission; the first left transistor is coupled to the first end of the light sensitive element, and the second left transistor is coupled between the first left transistor and the left storage capacitor; and the first right transistor is coupled to the first end of the light sensitive element, and the second right transistor is coupled between the first right transistor and the right storage capacitor;
a phase of the second left modulation signal is delayed by a first preset time t1 relative to a phase of the first left modulation signal, and the first preset time t1 meets 0 < t1 ≤ T/2; and
a phase of the second right modulation signal is delayed by a second preset time t2 relative to a phase of the first right modulation signal, and the second preset time t2 meets 0 < t2 ≤ T/2;
wherein the second left transistor is coupled to a first electrode of the left storage capacitor, the first left transistor is coupled between the second left transistor and the fourth left transistor; and the second right transistor is coupled to a first electrode of the right storage capacitor, the first right transistor is coupled between the second right transistor and the fourth right transistor; and
the method comprises:
receiving, by a gate (GA1) of the first left transistor (PGA), a first left modulation signal (MPGA), so that the first left transistor (PGA) is conducted; and receiving, by a gate (GA2) of the second left transistor (TGA), a second left modulation signal (MTGA), so that the second left transistor (TGA) is conducted, wherein
the first left modulation signal (MPGA) and the second left modulation signal (MTGA) each have a period of T, and the second left modulation signal (MTGA) and the first left modulation signal (MPGA) have a phase difference;
receiving, by a gate (GB1) of the first right transistor (PGB), a first right modulation signal (MPGB), so that the first right transistor (PGB) is conducted; and receiving, by a gate (GB2) of the second right transistor (TGB), a second right modulation signal (MTGB), so that the second right transistor (TGB) is conducted, wherein
the first right modulation signal (MPGB) and the second right modulation signal (MTGB) each have a period of T, and the second right modulation signal (MTGB) and the first right modulation signal (MPGB) have a phase difference;
receiving, by a gate (GA4) of the fourth left transistor (TXA), a left direct current signal, a voltage value of the left direct current signal is less than or equal to an amplitude of the first left modulation signal; and
receiving, by a gate (GB4) of the fourth right transistor (TXB), a right direct current signal, a voltage value of the right direct current signal is less than or equal to an amplitude of the first right modulation signal.

6. An image sensor pixel circuit (203), comprising:
light sensitive element (20);
a left transmission channel (30) coupled to a first end (c) of the light sensitive element (20), wherein the left transmission channel (30) comprises a first left transistor (PGA) and a second left transistor (TGA) that are connected in series;
a right transmission channel (31) coupled to the first end (c) of the light sensitive element (20), wherein the right transmission channel (31) comprises a first right transistor (PGB) and a second right transistor (TGB) that are connected in series;
a left storage capacitor (CA), located at an end that is of the left transmission channel (30); and
a right storage capacitor (CB), located at an end that is of the right transmission channel (31), wherein
the first left transistor (PGA) is coupled to the first end (c) of the light sensitive element (20), and the second left transistor (TGA) is coupled between the left storage capacitor (CA) and the first left transistor (PGA); a gate (GA1) of the first left transistor (PGA) receives a first left modulation signal (MPGA), a gate (GA2) of the second left transistor (TGA) receives a second left modulation signal (MTGA), and the first left modulation signal (MPGA) and the second left modulation signal (MTGA) each have a period of T, and have a same phase; and an amplitude of the first left modulation signal (MPGA) is less than an amplitude of the second left modulation signal (MTGA); and
the first right transistor (PGB) is coupled to the first end (c) of the light sensitive element (20), and the second right transistor (TGB) is coupled between the right storage capacitor (CB) and the first right transistor (PGB); a gate (GB1) of the first right transistor (PGB) receives a first right modulation signal (MPGB), a gate (GB2) of the second right transistor (TGB) receives a second right modulation signal (MTGB), the first right modulation signal (MPGB) and the second right modulation signal (MTGB) each have a period of T, and have a same phase; and an amplitude of the first right modulation signal (MPGB) is less than an amplitude of the second right modulation signal (MTGB); wherein
the left transmission channel (30) further comprises a fourth left transistor (TXA), the fourth left transistor (TXA) is connected in series with the first left transistor (PGA) and the second left transistor (TGA), and a gate (GA4) of the fourth left transistor (TXA) receives a left direct current signal; and
the right transmission channel (31) further comprises a fourth right transistor (TXB), the fourth right transistor (TXB) is connected in series with the first right transistor (PGB) and the second right transistor (TGB), and a gate (GB4) of the fourth right transistor (TXB) receives a right direct current signal;
wherein
the fourth left transistor is coupled to a first electrode of the left storage capacitor, the second left transistor is coupled between the first left transistor and the fourth left transistor, and a voltage value of the left direct current signal is greater than or equal to an amplitude of the second left modulation signal; and
the fourth right transistor is coupled to a first electrode of the right storage capacitor, the second right transistor is coupled between the first right transistor and the fourth right transistor, and a voltage value of the right direct current signal is greater than or equal to an amplitude of the second right modulation signal.

7. An image sensor pixel circuit (203), comprising:
light sensitive element (20);
a left transmission channel (30) coupled to a first end (c) of the light sensitive element (20), wherein the left transmission channel (30) comprises a first left transistor (PGA) and a second left transistor (TGA) that are connected in series;
a right transmission channel (31) coupled to the first end (c) of the light sensitive element (20), wherein the right transmission channel (31) comprises a first right transistor (PGB) and a second right transistor (TGB) that are connected in series;
a left storage capacitor (CA), located at an end that is of the left transmission channel (30); and
a right storage capacitor (CB), located at an end that is of the right transmission channel (31), wherein
the first left transistor (PGA) is coupled to the first end (c) of the light sensitive element (20), and the second left transistor (TGA) is coupled between the left storage capacitor (CA) and the first left transistor (PGA); a gate (GA1) of the first left transistor (PGA) receives a first left modulation signal (MPGA), a gate (GA2) of the second left transistor (TGA) receives a second left modulation signal (MTGA), and the first left modulation signal (MPGA) and the second left modulation signal (MTGA) each have a period of T, and have a same phase; and an amplitude of the first left modulation signal (MPGA) is less than an amplitude of the second left modulation signal (MTGA); and
the first right transistor (PGB) is coupled to the first end (c) of the light sensitive element (20), and the second right transistor (TGB) is coupled between the right storage capacitor (CB) and the first right transistor (PGB); a gate (GB1) of the first right transistor (PGB) receives a first right modulation signal (MPGB), a gate (GB2) of the second right transistor (TGB) receives a second right modulation signal (MTGB), the first right modulation signal (MPGB) and the second right modulation signal (MTGB) each have a period of T, and have a same phase; and an amplitude of the first right modulation signal (MPGB) is less than an amplitude of the second right modulation signal (MTGB); wherein
the left transmission channel (30) further comprises a fourth left transistor (TXA), the fourth left transistor (TXA) is connected in series with the first left transistor (PGA) and the second left transistor (TGA), and a gate (GA4) of the fourth left transistor (TXA) receives a left direct current signal; and
the right transmission channel (31) further comprises a fourth right transistor (TXB), the fourth right transistor (TXB) is connected in series with the first right transistor (PGB) and the second right transistor (TGB), and a gate (GB4) of the fourth right transistor (TXB) receives a right direct current signal;
wherein
the second left transistor is coupled to a first electrode of the left storage capacitor, the first left transistor is coupled between the second left transistor and the fourth left transistor, and a voltage value of the left direct current signal is less than or equal to an amplitude of the first left modulation signal; and
the second right transistor is coupled to a first electrode of the right storage capacitor, the first right transistor is coupled between the second right transistor and the fourth right transistor, and a voltage value of the right direct current signal is less than or equal to an amplitude of the first right modulation signal.

8. A method for controlling an image sensor pixel circuit (203), wherein the image sensor pixel circuit (203) comprises a light sensitive element (20), and a left transmission channel (30) and a right transmission channel (31) that are separately coupled to a first end (c) of the light sensitive element (20), wherein the left transmission channel (30) comprises a first left transistor (PGA) and a second left transistor (TGA) that are connected in series, and the right transmission channel (31) comprises a first right transistor (PGB) and a second right transistor (TGB) that are connected in series;
the image sensor pixel circuit (203) further comprises a left storage capacitor (CA) located at an end that is of the left transmission channel (30), and a right storage capacitor (CB) located at an end that is of the right transmission channel (31), wherein the first left transistor (PGA) is coupled to the first end (c) of the light sensitive element (20), and the second left transistor (TGA) is coupled between the left storage capacitor (CA) and the first left transistor (PGA); and the first right transistor (PGB) is coupled to the first end (c) of the light sensitive element (20), and the second right transistor (TGB) is coupled between the right storage capacitor (CB) and the first right transistor (PGB);
the left transmission channel (30) further comprises a fourth left transistor (TXA), the fourth left transistor (TXA) is connected in series with the first left transistor (PGA) and the second left transistor (TGA); and
the right transmission channel (31) further comprises a fourth right transistor (TXB), the fourth right transistor (TXB) is connected in series with the first right transistor (PGB) and the second right transistor (TGB);
wherein the fourth left transistor is coupled to a first electrode of the left storage capacitor, the second left transistor is coupled between the first left transistor and the fourth left transistor; and the fourth right transistor is coupled to a first electrode of the right storage capacitor, the second right transistor is coupled between the first right transistor and the fourth right transistor; and
the method comprises:
receiving, by a gate (GA1) of the first left transistor (PGA), a first left modulation signal (MPGA), so that the first left transistor (PGA) is conducted; and receiving, by a gate (GA2) of the second left transistor (TGA), a second left modulation signal (MTGA), so that the second left transistor (TGA) is conducted, wherein
the first left modulation signal (MPGA) and the second left modulation signal (MTGA) each have a period of T, and have a same phase, and an amplitude of the first left modulation signal (MPGA) is less than an amplitude of the second left modulation signal (MTGA);
receiving, by a gate (GB1) of the first right transistor (PGB), a first right modulation signal (MPGB), so that the first right transistor (PGB) is conducted; and receiving, by a gate (GB2) of the second right transistor (TGB), a second
right modulation signal (MTGB), so that the second right transistor (TGB) is conducted, wherein
the first right modulation signal (MPGB) and the second right modulation signal (MTGB) each have a period of T, and have a same phase, and an amplitude of the first right modulation signal (MPGB) is less than an amplitude of the second right modulation signal (MTGB);
receiving, by a gate (GA4) of the fourth left transistor (TXA) a left direct current signal, a voltage value of the left direct current signal is greater than or equal to an amplitude of the second left modulation signal; and
receiving, by a gate (GB4) of the fourth right transistor (TXB) a right direct current signal, a voltage value of the right direct current signal is greater than or equal to an amplitude of the second right modulation signal.

9. A method for controlling an image sensor pixel circuit (203), wherein the image sensor pixel circuit (203) comprises a light sensitive element (20), and a left transmission channel (30) and a right transmission channel (31) that are separately coupled to a first end (c) of the light sensitive element (20), wherein the left transmission channel (30) comprises a first left transistor (PGA) and a second left transistor (TGA) that are connected in series, and the right transmission channel (31) comprises a first right transistor (PGB) and a second right transistor (TGB) that are connected in series;
the image sensor pixel circuit (203) further comprises a left storage capacitor (CA) located at an end that is of the left transmission channel (30), and a right storage capacitor (CB) located at an end that is of the right transmission channel (31), wherein the first left transistor (PGA) is coupled to the first end (c) of the light sensitive element (20), and the second left transistor (TGA) is coupled between the left storage capacitor (CA) and the first left transistor (PGA); and the first right transistor (PGB) is coupled to the first end (c) of the light sensitive element (20), and the second right transistor (TGB) is coupled between the right storage capacitor (CB) and the first right transistor (PGB);
the left transmission channel (30) further comprises a fourth left transistor (TXA), the fourth left transistor (TXA) is connected in series with the first left transistor (PGA) and the second left transistor (TGA); and
the right transmission channel (31) further comprises a fourth right transistor (TXB), the fourth right transistor (TXB) is connected in series with the first right transistor (PGB) and the second right transistor (TGB);
wherein the second left transistor is coupled to a first electrode of the left storage capacitor, the first left transistor is coupled between the second left transistor and the fourth left transistor; and the second right transistor is coupled to a first electrode of the right storage capacitor, the first right transistor is coupled between the second right transistor and the fourth right transistor; and
the method comprises:
receiving, by a gate (GA1) of the first left transistor (PGA), a first left modulation signal (MPGA), so that the first left transistor (PGA) is conducted; and receiving, by a gate (GA2) of the second left transistor (TGA), a second left modulation signal (MTGA), so that the second left transistor (TGA) is conducted, wherein
the first left modulation signal (MPGA) and the second left modulation signal (MTGA) each have a period of T, and have a same phase, and an amplitude of the first left modulation signal (MPGA) is less than an amplitude of the second left modulation signal (MTGA);
receiving, by a gate (GB1) of the first right transistor (PGB), a first right modulation signal (MPGB), so that the first right transistor (PGB) is conducted; and receiving, by a gate (GB2) of the second right transistor (TGB), a second
right modulation signal (MTGB), so that the second right transistor (TGB) is conducted, wherein
the first right modulation signal (MPGB) and the second right modulation signal (MTGB) each have a period of T, and have a same phase, and an amplitude of the first right modulation signal (MPGB) is less than an amplitude of the second right modulation signal (MTGB);
receiving, by a gate (GA4) of the fourth left transistor (TXA) a left direct current signal, a voltage value of the left direct current signal is less than or equal to an amplitude of the first left modulation signal; and
receiving, by a gate (GB4) of the fourth right transistor (TXB) a right direct current signal, a voltage value of the right direct current signal is less than or equal to an amplitude of the first right modulation signal.

10. An image sensor, comprising a semiconductor substrate and a pixel array disposed on the semiconductor substrate, wherein the pixel array comprises a plurality of pixel structures arranged in an array, and each pixel structure comprises the image sensor pixel circuit according to any one of claims 1 to 3 or claims 6 to 7.

11. A terminal device, comprising a driver chip and the image sensor according to claim 10, wherein the driver chip comprises a modulation signal end configured to provide a modulation signal; and
the modulation signal end is separately coupled to the gates of the first left transistor, the second left transistor, the first right transistor, and the second right transistor in the image sensor pixel circuit.

## Patentansprüche

1. Bildsensorpixelschaltung (203), die Folgendes umfasst: ein lichtempfindliches Element (20);
einen linken Übertragungskanal (30), der mit einem ersten Ende (c) des lichtempfindlichen Elements (20) gekoppelt ist, wobei der linke Übertragungskanal (30) einen ersten linken Transistor (PGA) und einen zweiten linken Transistor (TGA) umfasst, die in Reihe geschaltet sind, ein Gate (GA1) des ersten linken Transistors ein erstes linkes Modulationssignal (MPGA) empfängt, ein Gate (GA2) des zweiten linken Transistors ein zweites linkes Modulationssignal (MTGA) empfängt, das erste linke Modulationssignal (MPGA) und das zweite linke Modulationssignal (MTGA) jeweils eine Periode von T aufweisen und das zweite linke Modulationssignal (MTGA) und das erste linke Modulationssignal (MPGA) eine Phasendifferenz aufweisen; und einen rechten Übertragungskanal (31), der mit dem ersten Ende (c) des lichtempfindlichen Elements gekoppelt ist, wobei der rechte Übertragungskanal (31) einen ersten rechten Transistor (PGB) und einen zweiten rechten Transistor (TGB) umfasst, die in Reihe geschaltet sind, ein Gate (GB1) des ersten rechten Transistors ein erstes rechtes Modulationssignal (MPGB) empfängt, ein Gate (GB2) des zweiten rechten Transistors ein zweites rechtes Modulationssignal (MTGB) empfängt, das erste rechte Modulationssignal (MPGB) und das zweite rechte Modulationssignal (MTGB) jeweils eine Periode von T aufweisen und das zweite rechte Modulationssignal (MTGB) und das erste rechte Modulationssignal (MPGB) eine Phasendifferenz aufweisen; wobei
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist und ein Gate (GA4) des vierten linken Transistors (TXA) ein linkes Gleichstromsignal empfängt; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist und ein Gate (GB4) des vierten rechten Transistors ein rechtes Gleichstromsignal empfängt;
wobei die Bildsensorpixelschaltung ferner Folgendes umfasst:
einen linken Speicherkondensator, der sich an einem Ende befindet, das zu dem linken Übertragungskanal gehört; und
einen rechten Speicherkondensator, der sich an einem Ende befindet, das zu dem rechten Übertragungskanal gehört, wobei
der erste linke Transistor mit dem ersten Ende des lichtempfindlichen Elements gekoppelt ist und der zweite linke Transistor zwischen dem ersten linken Transistor und dem linken Speicherkondensator gekoppelt ist; und der erste rechte Transistor mit dem ersten Ende des lichtempfindlichen Elements gekoppelt ist und der zweite rechte Transistor zwischen dem ersten rechten Transistor und dem rechten Speicherkondensator gekoppelt ist;
eine Phase des zweiten linken Modulationssignals um eine erste voreingestellte Zeit t1 relativ zu einer Phase des ersten linken Modulationssignals verzögert ist und die erste voreingestellte Zeit t1 0 < t1 ≤ T/2 erfüllt; und
eine Phase des zweiten rechten Modulationssignals um eine zweite voreingestellte Zeit t2 relativ zu einer Phase des ersten rechten Modulationssignals verzögert ist und die zweite voreingestellte Zeit t2 0 < t2 ≤ T/2 erfüllt;
wobei
der vierte linke Transistor mit einer ersten Elektrode des linken Speicherkondensators gekoppelt ist, der zweite linke Transistor zwischen dem ersten linken Transistor und dem vierten linken Transistor gekoppelt ist und ein Spannungswert des linken Gleichstromsignals größer oder gleich einer Amplitude des zweiten linken Modulationssignals ist; und
der vierte rechte Transistor mit einer ersten Elektrode des rechten Speicherkondensators gekoppelt ist, der zweite rechte Transistor zwischen dem ersten rechten Transistor und dem vierten rechten Transistor gekoppelt ist und ein Spannungswert des rechten Gleichstromsignals größer oder gleich einer Amplitude des zweiten rechten Modulationssignals ist.

2. Bildsensorpixelschaltung nach einem der Ansprüche 1, wobei die Bildsensorpixelschaltung ferner einen fünften Transistor umfasst, wobei
der fünfte Transistor zwischen dem linken Übertragungskanal und dem rechten Übertragungskanal gekoppelt ist, ein Gate des fünften Transistors ein fünftes Gleichstromsignal empfängt und ein Spannungswert des fünften Gleichstromsignals kleiner oder gleich einer Amplitude des ersten linken Modulationssignals ist oder kleiner oder gleich einer Amplitude des ersten rechten Modulationssignals ist.

3. Bildsensorpixelschaltung (203), die Folgendes umfasst: ein lichtempfindliches Element (20);
einen linken Übertragungskanal (30), der mit einem ersten Ende (c) des lichtempfindlichen Elements (20) gekoppelt ist, wobei der linke Übertragungskanal (30) einen ersten linken Transistor (PGA) und einen zweiten linken Transistor (TGA) umfasst, die in Reihe geschaltet sind, ein Gate (GA1) des ersten linken Transistors ein erstes linkes Modulationssignal (MPGA) empfängt, ein Gate (GA2) des zweiten linken Transistors ein zweites linkes Modulationssignal (MTGA) empfängt, das erste linke Modulationssignal (MPGA) und das zweite linke Modulationssignal (MTGA) jeweils eine Periode von T aufweisen und das zweite linke Modulationssignal (MTGA) und das erste linke Modulationssignal (MPGA) eine Phasendifferenz aufweisen; und einen rechten Übertragungskanal (31), der mit dem ersten Ende (c) des lichtempfindlichen Elements gekoppelt ist, wobei der rechte Übertragungskanal (31) einen ersten rechten Transistor (PGB) und einen zweiten rechten Transistor (TGB) umfasst, die in Reihe geschaltet sind, ein Gate (GB1) des ersten rechten Transistors ein erstes rechtes Modulationssignal (MPGB) empfängt, ein Gate (GB2) des zweiten rechten Transistors ein zweites rechtes Modulationssignal (MTGB) empfängt, das erste rechte Modulationssignal (MPGB) und das zweite rechte Modulationssignal (MTGB) jeweils eine Periode von T aufweisen und das zweite rechte Modulationssignal (MTGB) und das erste rechte Modulationssignal (MPGB) eine Phasendifferenz aufweisen; wobei
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist und ein Gate (GA4) des vierten linken Transistors (TXA) ein linkes Gleichstromsignal empfängt; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist und ein Gate (GB4) des vierten rechten Transistors ein rechtes Gleichstromsignal empfängt;
wobei die Bildsensorpixelschaltung ferner Folgendes umfasst:
einen linken Speicherkondensator, der sich an einem Ende befindet, das zu dem linken Übertragungskanal gehört; und
einen rechten Speicherkondensator, der sich an einem Ende befindet, das zu dem rechten Übertragungskanal gehört, wobei
der erste linke Transistor mit dem ersten Ende des lichtempfindlichen Elements gekoppelt ist und der zweite linke Transistor zwischen dem ersten linken Transistor und dem linken Speicherkondensator gekoppelt ist; und der erste rechte Transistor mit dem ersten Ende des lichtempfindlichen Elements gekoppelt ist und der zweite rechte Transistor zwischen dem ersten rechten Transistor und dem rechten Speicherkondensator gekoppelt ist;
eine Phase des zweiten linken Modulationssignals um eine erste voreingestellte Zeit t1 relativ zu einer Phase des ersten linken Modulationssignals verzögert ist und die erste voreingestellte Zeit t1 0 < t1 ≤ T/2 erfüllt; und
eine Phase des zweiten rechten Modulationssignals um eine zweite voreingestellte Zeit t2 relativ zu einer Phase des ersten rechten Modulationssignals verzögert ist und die zweite voreingestellte Zeit t2 0 < t2 ≤ T/2 erfüllt;
wobei
der zweite linke Transistor mit einer ersten Elektrode des linken Speicherkondensators gekoppelt ist, der erste linke Transistor zwischen den zweiten linken Transistor und den vierten linken Transistor gekoppelt ist, und ein Spannungswert des linken Gleichstromsignals kleiner oder gleich einer Amplitude des ersten linken Modulationssignals ist; und
der zweite rechte Transistor mit einer ersten Elektrode des rechten Speicherkondensators gekoppelt ist, der erste rechte Transistor zwischen dem zweiten rechten Transistor und dem vierten rechten Transistor gekoppelt ist und ein Spannungswert des rechten Gleichstromsignals kleiner oder gleich einer Amplitude des ersten rechten Modulationssignals ist.

4. Verfahren zum Steuern einer Bildsensorpixelschaltung (203), wobei die Bildsensorpixelschaltung ein lichtempfindliches Element (20) und einen linken Übertragungskanal (30) und einen rechten Übertragungskanal (31) umfasst, die separat mit einem ersten Ende (c) des lichtempfindlichen Elements (20) gekoppelt sind, wobei der linke Übertragungskanal einen ersten linken Transistor (PGA) und einen zweiten linken Transistor (TGA) umfasst, die in Reihe geschaltet sind, und der rechte Übertragungskanal einen ersten rechten Transistor (PGB) und einen zweiten rechten Transistor (TGB) umfasst, die in Reihe geschaltet sind,
wobei
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist;
wobei die Bildsensorpixelschaltung ferner einen linken Speicherkondensator und einen rechten Speicherkondensator umfasst, wobei sich der linke Speicherkondensator an einem Ende befindet, das zu dem linken Übertragungskanal gehört, und sich der rechte Speicherkondensator an einem Ende befindet, das zu dem rechten Übertragungskanal gehört; der erste linke Transistor mit dem ersten Ende des lichtempfindlichen Elements gekoppelt ist und der zweite linke Transistor zwischen dem ersten linken Transistor und dem linken Speicherkondensator gekoppelt ist; und der erste rechte Transistor mit dem ersten Ende des lichtempfindlichen Elements gekoppelt ist und der zweite rechte Transistor zwischen dem ersten rechten Transistor und dem rechten Speicherkondensator gekoppelt ist;
eine Phase des zweiten linken Modulationssignals um eine erste voreingestellte Zeit t1 relativ zu einer Phase des ersten linken Modulationssignals verzögert ist und die erste voreingestellte Zeit t1 0 < t1 ≤ T/2 erfüllt; und
eine Phase des zweiten rechten Modulationssignals um eine zweite voreingestellte Zeit t2 relativ zu einer Phase des ersten rechten Modulationssignals verzögert ist und die zweite voreingestellte Zeit t2 0 < t2 ≤ T/2 erfüllt;
wobei der vierte linke Transistor mit einer ersten Elektrode des linken Speicherkondensators gekoppelt ist, der zweite linke Transistor zwischen dem ersten linken Transistor und dem vierten linken Transistor gekoppelt ist; und der vierte rechte Transistor mit einer ersten Elektrode des rechten Speicherkondensators gekoppelt ist, der zweite rechte Transistor zwischen dem ersten rechten Transistor und dem vierten rechten Transistor gekoppelt ist; und
wobei das Verfahren Folgendes umfasst:
Empfangen, durch ein Gate (GA1) des ersten linken Transistors (PGA), eines ersten linken Modulationssignals (MPGA), sodass der erste linke Transistor (PGA) leitend gemacht wird; und Empfangen, durch ein Gate (GA2) des zweiten linken Transistors (TGA), eines zweiten linken Modulationssignals (MTGA), sodass der zweite linke Transistor (TGA) leitend gemacht wird, wobei
das erste linke Modulationssignal (MPGA) und das zweite linke Modulationssignal (MTGA) jeweils eine Periode von T aufweisen und das zweite linke Modulationssignal (MTGA) und das erste linke Modulationssignal (MPGA) eine Phasendifferenz aufweisen;
Empfangen, durch ein Gate (GB1) des ersten rechten Transistors (PGB), eines ersten rechten Modulationssignals (MPGB), sodass der erste rechte Transistor (PGB) leitend gemacht wird; und Empfangen, durch ein Gate (GB2) des zweiten rechten Transistors (TGB), eines zweiten rechten Modulationssignals (MTGB), sodass der zweite rechte Transistor (TGB) leitend gemacht wird, wobei
das erste rechte Modulationssignal (MPGB) und das zweite rechte Modulationssignal (MTGB) jeweils eine Periode von T aufweisen und das zweite rechte Modulationssignal (MTGB) und das erste rechte Modulationssignal (MPGB) eine Phasendifferenz aufweisen;
Empfangen, durch ein Gate (GA4) des vierten linken Transistors (TXA), eines linken Gleichstromsignals, wobei ein Spannungswert des linken Gleichstromsignals größer oder gleich einer Amplitude des zweiten linken Modulationssignals ist; und
Empfangen, durch ein Gate (GB4) des vierten rechten Transistors (TXB), eines rechten Gleichstromsignals, wobei ein Spannungswert des rechten Gleichstromsignals größer oder gleich einer Amplitude des zweiten rechten Modulationssignals ist.

5. Verfahren zum Steuern einer Bildsensorpixelschaltung (203), wobei die Bildsensorpixelschaltung ein lichtempfindliches Element (20) und einen linken Übertragungskanal (30) und einen rechten Übertragungskanal (31) umfasst, die separat mit einem ersten Ende (c) des lichtempfindlichen Elements (20) gekoppelt sind, wobei der linke Übertragungskanal einen ersten linken Transistor (PGA) und einen zweiten linken Transistor (TGA) umfasst, die in Reihe geschaltet sind, und der rechte Übertragungskanal einen ersten rechten Transistor (PGB) und einen zweiten rechten Transistor (TGB) umfasst, die in Reihe geschaltet sind,
wobei
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist;
wobei die Bildsensorpixelschaltung ferner einen linken Speicherkondensator und einen rechten Speicherkondensator umfasst, wobei sich der linke Speicherkondensator an einem Ende befindet, das zu dem linken Übertragungskanal gehört, und sich der rechte Speicherkondensator an einem Ende befindet, das zu dem rechten Übertragungskanal gehört; der erste linke Transistor mit dem ersten Ende des lichtempfindlichen Elements gekoppelt ist und der zweite linke Transistor zwischen dem ersten linken Transistor und dem linken Speicherkondensator gekoppelt ist; und der erste rechte Transistor mit dem ersten Ende des lichtempfindlichen Elements gekoppelt ist und der zweite rechte Transistor zwischen dem ersten rechten Transistor und dem rechten Speicherkondensator gekoppelt ist;
eine Phase des zweiten linken Modulationssignals um eine erste voreingestellte Zeit t1 relativ zu einer Phase des ersten linken Modulationssignals verzögert ist und die erste voreingestellte Zeit t1 0 < t1 ≤ T/2 erfüllt; und
eine Phase des zweiten rechten Modulationssignals um eine zweite voreingestellte Zeit t2 relativ zu einer Phase des ersten rechten Modulationssignals verzögert ist und die zweite voreingestellte Zeit t2 0 < t2 ≤ T/2 erfüllt;
wobei der zweite linke Transistor mit einer ersten Elektrode des linken Speicherkondensators gekoppelt ist, der erste linke Transistor zwischen dem zweiten linken Transistor und dem vierten linken Transistor gekoppelt ist; und der zweite rechte Transistor mit einer ersten Elektrode des rechten Speicherkondensators gekoppelt ist, der erste rechte Transistor zwischen dem zweiten rechten Transistor und dem vierten rechten Transistor gekoppelt ist; und
wobei das Verfahren Folgendes umfasst:
Empfangen, durch ein Gate (GA1) des ersten linken Transistors (PGA), eines ersten linken Modulationssignals (MPGA), sodass der erste linke Transistor (PGA) leitend gemacht wird; und Empfangen, durch ein Gate (GA2) des zweiten linken Transistors (TGA), eines zweiten linken Modulationssignals (MTGA), sodass der zweite linke Transistor (TGA) leitend gemacht wird, wobei
das erste linke Modulationssignal (MPGA) und das zweite linke Modulationssignal (MTGA) jeweils eine Periode von T aufweisen und das zweite linke Modulationssignal (MTGA) und das erste linke Modulationssignal (MPGA) eine Phasendifferenz aufweisen;
Empfangen, durch ein Gate (GB1) des ersten rechten Transistors (PGB), eines ersten rechten Modulationssignals (MPGB), sodass der erste rechte Transistor (PGB) leitend gemacht wird; und Empfangen, durch ein Gate (GB2) des zweiten rechten Transistors (TGB), eines zweiten rechten Modulationssignals (MTGB), sodass der zweite rechte Transistor (TGB) leitend gemacht wird, wobei
das erste rechte Modulationssignal (MPGB) und das zweite rechte Modulationssignal (MTGB) jeweils eine Periode von T aufweisen und das zweite rechte Modulationssignal (MTGB) und das erste rechte Modulationssignal (MPGB) eine Phasendifferenz aufweisen;
Empfangen, durch ein Gate (GA4) des vierten linken Transistors (TXA), eines linken Gleichstromsignals, wobei ein Spannungswert des linken Gleichstromsignals kleiner oder gleich einer Amplitude des ersten linken Modulationssignals ist; und
Empfangen, durch ein Gate (GB4) des vierten rechten Transistors (TXB), eines rechten Gleichstromsignals, wobei ein Spannungswert des rechten Gleichstromsignals kleiner oder gleich einer Amplitude des ersten rechten Modulationssignals ist.

6. Bildsensorpixelschaltung (203), die Folgendes umfasst:
ein lichtempfindliches Element (20);
einen linken Übertragungskanal (30), der mit einem ersten Ende (c) des lichtempfindlichen Elements (20) gekoppelt ist, wobei der linke Übertragungskanal (30) einen ersten linken Transistor (PGA) und einen zweiten linken Transistor (TGA) umfasst, die in Reihe geschaltet sind;
einen rechten Übertragungskanal (31), der mit dem ersten Ende (c) des lichtempfindlichen Elements (20) gekoppelt ist, wobei der rechte Übertragungskanal (31) einen ersten rechten Transistor (PGB) und einen zweiten rechten Transistor (TGB) umfasst, die in Reihe geschaltet sind;
einen linken Speicherkondensator (CA), der sich an einem Ende befindet, das zu dem linken Übertragungskanal (30) gehört; und
einen rechten Speicherkondensator (CB), der sich an einem Ende befindet, das zu dem rechten Übertragungskanal (31) gehört, wobei
der erste linke Transistor (PGA) mit dem ersten Ende (c) des lichtempfindlichen Elements (20) gekoppelt ist und der zweite linke Transistor (TGA) zwischen dem linken Speicherkondensator (CA) und dem ersten linken Transistor (PGA) gekoppelt ist; ein Gate (GA1) des ersten linken Transistors (PGA) ein erstes linkes Modulationssignal (MPGA) empfängt, ein Gate (GA2) des zweiten linken Transistors (TGA) ein zweites linkes Modulationssignal (MTGA) empfängt und das erste linke Modulationssignal (MPGA) und das zweite linke Modulationssignal (MTGA) jeweils eine Periode von T aufweisen und eine gleiche Phase aufweisen; und eine Amplitude des ersten linken Modulationssignals (MPGA) kleiner als eine Amplitude des zweiten linken Modulationssignals (MTGA) ist; und
der erste rechte Transistor (PGB) mit dem ersten Ende (c) des lichtempfindlichen Elements (20) gekoppelt ist und der zweite rechte Transistor (TGB) zwischen dem rechten Speicherkondensator (CB) und dem ersten rechten Transistor (PGB) gekoppelt ist; ein Gate (GB1) des ersten rechten Transistors (PGB) ein erstes rechtes Modulationssignal (MPGB) empfängt, ein Gate (GB2) des zweiten rechten Transistors (TGB) ein zweites rechtes Modulationssignal (MTGB) empfängt, das erste rechte Modulationssignal (MPGB) und das zweite rechte Modulationssignal (MTGB) jeweils eine Periode von T aufweisen und eine gleiche Phase aufweisen; und eine Amplitude des ersten rechten Modulationssignals (MPGB) kleiner als eine Amplitude des zweiten rechten Modulationssignals (MTGB) ist; wobei
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist und ein Gate (GA4) des vierten linken Transistors (TXA) ein linkes Gleichstromsignal empfängt; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist und ein Gate (GB4) des vierten rechten Transistors (TXB) ein rechtes Gleichstromsignal empfängt;
wobei
der vierte linke Transistor mit einer ersten Elektrode des linken Speicherkondensators gekoppelt ist, der zweite linke Transistor zwischen dem ersten linken Transistor und dem vierten linken Transistor gekoppelt ist und ein Spannungswert des linken Gleichstromsignals größer oder gleich einer Amplitude des zweiten linken Modulationssignals ist; und
der vierte rechte Transistor mit einer ersten Elektrode des rechten Speicherkondensators gekoppelt ist, der zweite rechte Transistor zwischen dem ersten rechten Transistor und dem vierten rechten Transistor gekoppelt ist und ein Spannungswert des rechten Gleichstromsignals größer oder gleich einer Amplitude des zweiten rechten Modulationssignals ist.

7. Bildsensorpixelschaltung (203), die Folgendes umfasst:
ein lichtempfindliches Element (20);
einen linken Übertragungskanal (30), der mit einem ersten Ende (c) des lichtempfindlichen Elements (20) gekoppelt ist, wobei der linke Übertragungskanal (30) einen ersten linken Transistor (PGA) und einen zweiten linken Transistor (TGA) umfasst, die in Reihe geschaltet sind;
einen rechten Übertragungskanal (31), der mit dem ersten Ende (c) des lichtempfindlichen Elements (20) gekoppelt ist, wobei der rechte Übertragungskanal (31) einen ersten rechten Transistor (PGB) und einen zweiten rechten Transistor (TGB) umfasst, die in Reihe geschaltet sind;
einen linken Speicherkondensator (CA), der sich an einem Ende befindet, das zu dem linken Übertragungskanal (30) gehört; und
einen rechten Speicherkondensator (CB), der sich an einem Ende befindet, das zu dem rechten Übertragungskanal (31) gehört, wobei
der erste linke Transistor (PGA) mit dem ersten Ende (c) des lichtempfindlichen Elements (20) gekoppelt ist und der zweite linke Transistor (TGA) zwischen dem linken Speicherkondensator (CA) und dem ersten linken Transistor (PGA) gekoppelt ist; ein Gate (GA1) des ersten linken Transistors (PGA) ein erstes linkes Modulationssignal (MPGA) empfängt, ein Gate (GA2) des zweiten linken Transistors (TGA) ein zweites linkes Modulationssignal (MTGA) empfängt und das erste linke Modulationssignal (MPGA) und das zweite linke Modulationssignal (MTGA) jeweils eine Periode von T aufweisen und eine gleiche Phase aufweisen; und eine Amplitude des ersten linken Modulationssignals (MPGA) kleiner als eine Amplitude des zweiten linken Modulationssignals (MTGA) ist; und
der erste rechte Transistor (PGB) mit dem ersten Ende (c) des lichtempfindlichen Elements (20) gekoppelt ist und der zweite rechte Transistor (TGB) zwischen dem rechten Speicherkondensator (CB) und dem ersten rechten Transistor (PGB) gekoppelt ist; ein Gate (GB1) des ersten rechten Transistors (PGB) ein erstes rechtes Modulationssignal (MPGB) empfängt, ein Gate (GB2) des zweiten rechten Transistors (TGB) ein zweites rechtes Modulationssignal (MTGB) empfängt, das erste rechte Modulationssignal (MPGB) und das zweite rechte Modulationssignal (MTGB) jeweils eine Periode von T aufweisen und eine gleiche Phase aufweisen; und eine Amplitude des ersten rechten Modulationssignals (MPGB) kleiner als eine Amplitude des zweiten rechten Modulationssignals (MTGB) ist; wobei
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist und ein Gate (GA4) des vierten linken Transistors (TXA) ein linkes Gleichstromsignal empfängt; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist und ein Gate (GB4) des vierten rechten Transistors (TXB) ein rechtes Gleichstromsignal empfängt;
wobei
der zweite linke Transistor mit einer ersten Elektrode des linken Speicherkondensators gekoppelt ist, der erste linke Transistor zwischen den zweiten linken Transistor und den vierten linken Transistor gekoppelt ist, und ein Spannungswert des linken Gleichstromsignals kleiner oder gleich einer Amplitude des ersten linken Modulationssignals ist; und
der zweite rechte Transistor mit einer ersten Elektrode des rechten Speicherkondensators gekoppelt ist, der erste rechte Transistor zwischen dem zweiten rechten Transistor und dem vierten rechten Transistor gekoppelt ist und ein Spannungswert des rechten Gleichstromsignals kleiner oder gleich einer Amplitude des ersten rechten Modulationssignals ist.

8. Verfahren zum Steuern einer Bildsensorpixelschaltung (203), wobei die Bildsensorpixelschaltung (203) ein lichtempfindliches Element (20) und einen linken Übertragungskanal (30) und einen rechten Übertragungskanal (31) umfasst, die separat mit einem ersten Ende (c) des lichtempfindlichen Elements (20) gekoppelt sind, wobei der linke Übertragungskanal (30) einen ersten linken Transistor (PGA) und einen zweiten linken Transistor (TGA) umfasst, die in Reihe geschaltet sind, und der rechte Übertragungskanal (31) einen ersten rechten Transistor (PGB) und einen zweiten rechten Transistor (TGB) umfasst, die in Reihe geschaltet sind;
die Bildsensorpixelschaltung (203) ferner einen linken Speicherkondensator (CA), der sich an einem Ende befindet, das zu dem linken Übertragungskanal (30) gehört, und einen rechten Speicherkondensator (CB), der sich an einem Ende befindet, das zu dem rechten Übertragungskanal (31) gehört, umfasst, wobei der erste linke Transistor (PGA) mit dem ersten Ende (c) des lichtempfindlichen Elements (20) gekoppelt ist und der zweite linke Transistor (TGA) zwischen dem linken Speicherkondensator (CA) und dem ersten linken Transistor (PGA) gekoppelt ist; und der erste rechte Transistor (PGB) mit dem ersten Ende (c) des lichtempfindlichen Elements (20) gekoppelt ist und der zweite rechte Transistor (TGB) zwischen dem rechten Speicherkondensator (CB) und dem ersten rechten Transistor (PGB) gekoppelt ist;
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist;
wobei der vierte linke Transistor mit einer ersten Elektrode des linken Speicherkondensators gekoppelt ist, der zweite linke Transistor zwischen dem ersten linken Transistor und dem vierten linken Transistor gekoppelt ist; und der vierte rechte Transistor mit einer ersten Elektrode des rechten Speicherkondensators gekoppelt ist, der zweite rechte Transistor zwischen dem ersten rechten Transistor und dem vierten rechten Transistor gekoppelt ist; und
wobei das Verfahren Folgendes umfasst:
Empfangen, durch ein Gate (GA1) des ersten linken Transistors (PGA), eines ersten linken Modulationssignals (MPGA), sodass der erste linke Transistor (PGA) leitend gemacht wird; und Empfangen, durch ein Gate (GA2) des zweiten linken Transistors (TGA), eines zweiten linken Modulationssignals (MTGA), sodass der zweite linke Transistor (TGA) leitend gemacht wird, wobei
das erste linke Modulationssignal (MPGA) und das zweite linke Modulationssignal (MTGA) jeweils eine Periode von T aufweisen und eine gleiche Phase aufweisen und eine Amplitude des ersten linken Modulationssignals (MPGA) kleiner als eine Amplitude des zweiten linken Modulationssignals (MTGA) ist;
Empfangen, durch ein Gate (GB1) des ersten rechten Transistors (PGB), eines ersten rechten Modulationssignals (MPGB), sodass der erste rechte Transistor (PGB) leitend gemacht wird; und Empfangen, durch ein Gate (GB2) des zweiten rechten Transistors (TGB), eines zweiten rechten Modulationssignals (MTGB), sodass der zweite rechte Transistor (TGB) leitend gemacht wird, wobei
das erste rechte Modulationssignal (MPGB) und das zweite rechte Modulationssignal (MTGB) jeweils eine Periode von T aufweisen und eine gleiche Phase aufweisen und eine Amplitude des ersten rechten Modulationssignals (MPGB) kleiner als eine Amplitude des zweiten rechten Modulationssignals (MTGB) ist;
Empfangen, durch ein Gate (GA4) des vierten linken Transistors (TXA), eines linken Gleichstromsignals, wobei ein Spannungswert des linken Gleichstromsignals größer oder gleich einer Amplitude des zweiten linken Modulationssignals ist; und
Empfangen, durch ein Gate (GB4) des vierten rechten Transistors (TXB), eines rechten Gleichstromsignals, wobei ein Spannungswert des rechten Gleichstromsignals größer oder gleich einer Amplitude des zweiten rechten Modulationssignals ist.

9. Verfahren zum Steuern einer Bildsensorpixelschaltung (203), wobei die Bildsensorpixelschaltung (203) ein lichtempfindliches Element (20) und einen linken Übertragungskanal (30) und einen rechten Übertragungskanal (31) umfasst, die separat mit einem ersten Ende (c) des lichtempfindlichen Elements (20) gekoppelt sind, wobei der linke Übertragungskanal (30) einen ersten linken Transistor (PGA) und einen zweiten linken Transistor (TGA) umfasst, die in Reihe geschaltet sind, und der rechte Übertragungskanal (31) einen ersten rechten Transistor (PGB) und einen zweiten rechten Transistor (TGB) umfasst, die in Reihe geschaltet sind;
die Bildsensorpixelschaltung (203) ferner einen linken Speicherkondensator (CA), der sich an einem Ende befindet, das zu dem linken Übertragungskanal (30) gehört, und einen rechten Speicherkondensator (CB), der sich an einem Ende befindet, das zu dem rechten Übertragungskanal (31) gehört, umfasst, wobei der erste linke Transistor (PGA) mit dem ersten Ende (c) des lichtempfindlichen Elements (20) gekoppelt ist und der zweite linke Transistor (TGA) zwischen dem linken Speicherkondensator (CA) und dem ersten linken Transistor (PGA) gekoppelt ist; und der erste rechte Transistor (PGB) mit dem ersten Ende (c) des lichtempfindlichen Elements (20) gekoppelt ist und der zweite rechte Transistor (TGB) zwischen dem rechten Speicherkondensator (CB) und dem ersten rechten Transistor (PGB) gekoppelt ist;
der linke Übertragungskanal (30) ferner einen vierten linken Transistor (TXA) umfasst, der vierte linke Transistor (TXA) mit dem ersten linken Transistor (PGA) und dem zweiten linken Transistor (TGA) in Reihe geschaltet ist; und
der rechte Übertragungskanal (31) ferner einen vierten rechten Transistor (TXB) umfasst, der vierte rechte Transistor (TXB) mit dem ersten rechten Transistor (PGB) und dem zweiten rechten Transistor (TGB) in Reihe geschaltet ist;
wobei der zweite linke Transistor mit einer ersten Elektrode des linken Speicherkondensators gekoppelt ist, der erste linke Transistor zwischen dem zweiten linken Transistor und dem vierten linken Transistor gekoppelt ist; und der zweite rechte Transistor mit einer ersten Elektrode des rechten Speicherkondensators gekoppelt ist, der erste rechte Transistor zwischen dem zweiten rechten Transistor und dem vierten rechten Transistor gekoppelt ist; und
wobei das Verfahren Folgendes umfasst:
Empfangen, durch ein Gate (GA1) des ersten linken Transistors (PGA), eines ersten linken Modulationssignals (MPGA), sodass der erste linke Transistor (PGA) leitend gemacht wird; und Empfangen, durch ein Gate (GA2) des zweiten linken Transistors (TGA), eines zweiten linken Modulationssignals (MTGA), sodass der zweite linke Transistor (TGA) leitend gemacht wird, wobei
das erste linke Modulationssignal (MPGA) und das zweite linke Modulationssignal (MTGA) jeweils eine Periode von T aufweisen und eine gleiche Phase aufweisen und eine Amplitude des ersten linken Modulationssignals (MPGA) kleiner als eine Amplitude des zweiten linken Modulationssignals (MTGA) ist;
Empfangen, durch ein Gate (GB1) des ersten rechten Transistors (PGB), eines ersten rechten Modulationssignals (MPGB), sodass der erste rechte Transistor (PGB) leitend gemacht wird; und Empfangen, durch ein Gate (GB2) des zweiten rechten Transistors (TGB), eines zweiten rechten Modulationssignals (MTGB), sodass der zweite rechte Transistor (TGB) leitend gemacht wird, wobei
das erste rechte Modulationssignal (MPGB) und das zweite rechte Modulationssignal (MTGB) jeweils eine Periode von T aufweisen und eine gleiche Phase aufweisen und eine Amplitude des ersten rechten Modulationssignals (MPGB) kleiner als eine Amplitude des zweiten rechten Modulationssignals (MTGB) ist;
Empfangen, durch ein Gate (GA4) des vierten linken Transistors (TXA), eines linken Gleichstromsignals, wobei ein Spannungswert des linken Gleichstromsignals kleiner oder gleich einer Amplitude des ersten linken Modulationssignals ist; und
Empfangen, durch ein Gate (GB4) des vierten rechten Transistors (TXB), eines rechten Gleichstromsignals, wobei ein Spannungswert des rechten Gleichstromsignals kleiner oder gleich einer Amplitude des ersten rechten Modulationssignals ist.

10. Bildsensor, umfassend ein Halbleitersubstrat und ein Pixelarray, das auf dem Halbleitersubstrat angeordnet ist, wobei das Pixelarray mehrere Pixelstrukturen umfasst, die in einem Array angeordnet sind, und jede Pixelstruktur die Bildsensorpixelschaltung nach einem der Ansprüche 1 bis 3 oder der Ansprüche 6 bis 7 umfasst.

11. Endgerätevorrichtung, die einen Treiberchip und den Bildsensor nach Anspruch 10 umfasst, wobei der Treiberchip ein Modulationssignalende umfasst, das dazu ausgelegt ist, ein Modulationssignal bereitzustellen; und
das Modulationssignalende separat mit den Gates des ersten linken Transistors, des zweiten linken Transistors, des ersten rechten Transistors und des zweiten rechten Transistors in der Bildsensorpixelschaltung gekoppelt ist.

## Revendications

1. Circuit de pixel de capteur d'image (203), comprenant : un élément photosensible (20) ;
un canal de transmission gauche (30) couplé à une première extrémité (c) de l'élément photosensible (20), le canal de transmission gauche (30) comprenant un premier transistor gauche (PGA) et un deuxième transistor gauche (TGA) connectés en série, une grille (GA1) du premier transistor gauche recevant un premier signal de modulation gauche (MPGA), une grille (GA2) du deuxième transistor gauche recevant un deuxième signal de modulation gauche (MTGA), le premier signal de modulation gauche (MPGA) et le deuxième signal de modulation gauche (MTGA) ayant chacun une période de T, et le deuxième signal de modulation gauche (MTGA) et le premier signal de modulation gauche (MPGA) ayant une différence de phase ; et un canal de transmission droit (31) couplé à la première extrémité (c) de l'élément photosensible, le canal de transmission droit (31) comprenant un premier transistor droit (PGB) et un deuxième transistor droit (TGB) connectés en série, une grille (GB1) du premier transistor droit recevant un premier signal de modulation droit (MPGB), une grille (GB2) du deuxième transistor droit recevant un deuxième signal de modulation droit (MTGB), le premier signal de modulation droit (MPGB) et le deuxième signal de modulation droit (MTGB) ayant chacun une période de T, et le deuxième signal de modulation droit (MTGB) et le premier signal de modulation droit (MPGB) ayant une différence de phase ; dans lequel
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA), et une grille (GA4) du quatrième transistor gauche (TXA) reçoit un signal de courant continu gauche ; et
le canal de transmission droit (31) comprend en outre un quatrième transistor droit (TXB), le quatrième transistor droit (TXB) est connecté en série avec le premier transistor droit (PGB) et le deuxième transistor droit (TGB), et une grille (GB4) du quatrième transistor droit reçoit un signal de courant continu droit ;
dans lequel le circuit de pixel de capteur d'image comprend en outre :
un condensateur de stockage gauche, situé à une extrémité du canal de transmission gauche ; et
un condensateur de stockage droit, situé à une extrémité du canal de transmission droit, dans lequel
le premier transistor gauche est couplé à la première extrémité de l'élément photosensible, et le deuxième transistor gauche est couplé entre le premier transistor gauche et le condensateur de stockage gauche ; et le premier transistor droit est couplé à la première extrémité de l'élément photosensible, et le deuxième transistor droit est couplé entre le premier transistor droit et le condensateur de stockage droit ;
une phase du deuxième signal de modulation gauche est retardée d'un premier instant prédéfini t1 par rapport à une phase du premier signal de modulation gauche, et le premier instant prédéfini t1 remplit 0 < t1 ≤ T/2 ; et
une phase du deuxième signal de modulation droit est retardée d'un deuxième instant prédéfini t2 par rapport à une phase du premier signal de modulation droit et le deuxième instant prédéfini t2 vérifie 0 < t2 ≤ T/2 ;
dans lequel
le quatrième transistor gauche est couplé à une première électrode du condensateur de stockage gauche, le deuxième transistor gauche est couplé entre le premier transistor gauche et le quatrième transistor gauche, et une valeur de tension du signal de courant continu gauche est supérieure ou égale à une amplitude du deuxième signal de modulation gauche ; et
le quatrième transistor droit est couplé à une première électrode du condensateur de stockage droit, le deuxième transistor droit est couplé entre le premier transistor droit et le quatrième transistor droit et une valeur de tension du signal de courant continu droit est supérieure ou égale à une amplitude du deuxième signal de modulation droit.

2. Circuit de pixel de capteur d'image selon l'une quelconque de la revendication 1, dans lequel le circuit de pixel de capteur d'image comprend en outre un cinquième transistor, dans lequel
le cinquième transistor est couplé entre le canal de transmission gauche et le canal de transmission droit, une grille du cinquième transistor reçoit un cinquième signal de courant continu, et une valeur de tension du cinquième signal de courant continu est inférieure ou égale à une amplitude du premier signal de modulation gauche, ou est inférieure ou égale à une amplitude du premier signal de modulation droit.

3. Circuit de pixel de capteur d'image (203), comprenant : un élément photosensible (20) ;
un canal de transmission gauche (30) couplé à une première extrémité (c) de l'élément photosensible (20), le canal de transmission gauche (30) comprenant un premier transistor gauche (PGA) et un deuxième transistor gauche (TGA) connectés en série, une grille (GA1) du premier transistor gauche recevant un premier signal de modulation gauche (MPGA), une grille (GA2) du deuxième transistor gauche recevant un deuxième signal de modulation gauche (MTGA), le premier signal de modulation gauche (MPGA) et le deuxième signal de modulation gauche (MTGA) ayant chacun une période de T, et le deuxième signal de modulation gauche (MTGA) et le premier signal de modulation gauche (MPGA) ayant une différence de phase ; et un canal de transmission droit (31) couplé à la première extrémité (c) de l'élément photosensible, le canal de transmission droit (31) comprenant un premier transistor droit (PGB) et un deuxième transistor droit (TGB) connectés en série, une grille (GB1) du premier transistor droit recevant un premier signal de modulation droit (MPGB), une grille (GB2) du deuxième transistor droit recevant un deuxième signal de modulation droit (MTGB), le premier signal de modulation droit (MPGB) et le deuxième signal de modulation droit (MTGB) ayant chacun une période de T, et le deuxième signal de modulation droit (MTGB) et le premier signal de modulation droit (MPGB) ayant une différence de phase ; dans lequel
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA), et une grille (GA4) du quatrième transistor gauche (TXA) reçoit un signal de courant continu gauche ; et
le canal de transmission droit (31) comprend en outre un quatrième transistor droit (TXB), le quatrième transistor droit (TXB) est connecté en série avec le premier transistor droit (PGB) et le deuxième transistor droit (TGB), et une grille (GB4) du quatrième transistor droit reçoit un signal de courant continu droit ;
dans lequel le circuit de pixel de capteur d'image comprend en outre :
un condensateur de stockage gauche, situé à une extrémité du canal de transmission gauche ; et
un condensateur de stockage droit, situé à une extrémité du canal de transmission droit, dans lequel
le premier transistor gauche est couplé à la première extrémité de l'élément photosensible, et le deuxième transistor gauche est couplé entre le premier transistor gauche et le condensateur de stockage gauche ; et le premier transistor droit est couplé à la première extrémité de l'élément photosensible, et le deuxième transistor droit est couplé entre le premier transistor droit et le condensateur de stockage droit ;
une phase du deuxième signal de modulation gauche est retardée d'un premier instant prédéfini t1 par rapport à une phase du premier signal de modulation gauche, et le premier instant prédéfini t1 remplit 0 < t1 ≤ T/2 ; et
une phase du deuxième signal de modulation droit est retardée d'un deuxième instant prédéfini t2 par rapport à une phase du premier signal de modulation droit et le deuxième instant prédéfini t2 vérifie 0 < t2 ≤ T/2 ;
dans lequel
le deuxième transistor gauche est couplé à une première électrode du condensateur de stockage gauche, le premier transistor gauche est couplé entre le deuxième transistor gauche et le quatrième transistor gauche, et une valeur de tension du signal de courant continu gauche est inférieure ou égale à une amplitude du premier signal de modulation gauche ; et
le deuxième transistor droit est couplé à une première électrode du condensateur de stockage droit, le premier transistor droit est couplé entre le deuxième transistor droit et le quatrième transistor droit, et une valeur de tension du signal de courant continu droit est inférieure ou égale à une amplitude du premier signal de modulation droit.

4. Procédé de commande d'un circuit de pixel de capteur d'image (203), dans lequel le circuit de pixel de capteur d'image comprend un élément photosensible (20), et un canal de transmission gauche (30) et un canal de transmission droit (31) couplés séparément à une première extrémité (c) de l'élément photosensible (20), le canal de transmission gauche comprenant un premier transistor gauche (PGA) et un deuxième transistor gauche (TGA) connectés en série, et le canal de transmission droit comprenant un premier transistor droit (PGB) et un deuxième transistor droit (TGB) connectés en série,
dans lequel
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA) ; et
le canal de transmission droit (31) comprend en outre un quatrième transistor droit (TXB), le quatrième transistor droit (TXB) est connecté en série avec le premier transistor droit (PGB) et le deuxième transistor droit (TGB) ;
dans lequel le circuit de pixel de capteur d'image comprend en outre un condensateur de stockage gauche et un condensateur de stockage droit, le condensateur de stockage gauche étant situé à une extrémité du canal de transmission gauche, et le condensateur de stockage droit étant situé à une extrémité de la transmission droite ; le premier transistor gauche étant couplé à la première extrémité de l'élément photosensible, et le deuxième transistor gauche étant couplé entre le premier transistor gauche et le condensateur de stockage gauche ; et le premier transistor droit étant couplé à la première extrémité de l'élément photosensible, et le deuxième transistor droit étant couplé entre le premier transistor droit et le condensateur de stockage droit ;
une phase du deuxième signal de modulation gauche est retardée d'un premier instant prédéfini t1 par rapport à une phase du premier signal de modulation gauche, et le premier instant prédéfini t1 remplit 0 < t1 ≤ T/2 ; et
une phase du deuxième signal de modulation droit est retardée d'un deuxième instant prédéfini t2 par rapport à une phase du premier signal de modulation droit et le deuxième instant prédéfini t2 vérifie 0 < t2 ≤ T/2 ;
dans lequel le quatrième transistor gauche est couplé à une première électrode du condensateur de stockage gauche, le deuxième transistor gauche est couplé entre le premier transistor gauche et le quatrième transistor gauche ; et le quatrième transistor droit est couplé à une première électrode du condensateur de stockage droit, le deuxième transistor droit est couplé entre le premier transistor droit et le quatrième transistor droit ; et
le procédé comprend :
la réception, par une grille (GA1) du premier transistor gauche (PGA), d'un premier signal de modulation gauche (MPGA), de sorte que le premier transistor gauche (PGA) est conducteur ; et la réception, par une grille (GA2) du deuxième transistor gauche (TGA), d'un deuxième signal de modulation gauche (MTGA), de sorte que le deuxième transistor gauche (TGA) est conducteur, dans lequel
le premier signal de modulation gauche (MPGA) et le deuxième signal de modulation gauche (MTGA) ont chacun une période de T et le deuxième signal de modulation gauche (MTGA) et le premier signal de modulation gauche (MPGA) ont une différence de phase ;
la réception, par une grille (GB1) du premier transistor droit (PGB), d'un premier signal de modulation droit (MPGB), de sorte que le premier transistor droit (PGB) est conducteur ; et la réception, par une grille (GB2) du deuxième transistor droit (TGB), d'un deuxième signal de modulation droit (MTGB), de sorte que le deuxième transistor droit(TGB) est conducteur, dans lequel
le premier signal de modulation droit (MPGB) et le deuxième signal de modulation droit (MTGB) ont chacun une période T, et le deuxième signal de modulation droit (MTGB) et le premier signal de modulation droit (MPGB) ont une différence de phase ;
la réception, par une grille (GA4) du quatrième transistor gauche (TXA), d'un signal de courant continu gauche, une valeur de tension du signal de courant continu gauche est supérieure ou égale à une amplitude du deuxième signal de modulation gauche ; et
la réception, par une grille (GB4) du quatrième transistor droit (TXB), d'un signal de courant continu droit, une valeur de tension du signal de courant continu droit est supérieure ou égale à une amplitude du deuxième signal de modulation droit.

5. Procédé de commande d'un circuit de pixel de capteur d'image (203), dans lequel le circuit de pixel de capteur d'image comprend un élément photosensible (20), et un canal de transmission gauche (30) et un canal de transmission droit (31) couplés séparément à une première extrémité (c) de l'élément photosensible (20), le canal de transmission gauche comprenant un premier transistor gauche (PGA) et un deuxième transistor gauche (TGA) connectés en série, et le canal de transmission droit comprenant un premier transistor droit (PGB) et un deuxième transistor droit (TGB) connectés en série,
dans lequel
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA) ; et
le canal de transmission droit (31) comprend en outre un quatrième transistor droit (TXB), le quatrième transistor droit (TXB) est connecté en série avec le premier transistor droit (PGB) et le deuxième transistor droit (TGB) ;
dans lequel le circuit de pixel de capteur d'image comprend en outre un condensateur de stockage gauche et un condensateur de stockage droit, le condensateur de stockage gauche étant situé à une extrémité du canal de transmission gauche, et le condensateur de stockage droit étant situé à une extrémité de la transmission droite ; le premier transistor gauche étant couplé à la première extrémité de l'élément photosensible, et le deuxième transistor gauche étant couplé entre le premier transistor gauche et le condensateur de stockage gauche ; et le premier transistor droit étant couplé à la première extrémité de l'élément photosensible, et le deuxième transistor droit étant couplé entre le premier transistor droit et le condensateur de stockage droit ;
une phase du deuxième signal de modulation gauche est retardée d'un premier instant prédéfini t1 par rapport à une phase du premier signal de modulation gauche, et le premier instant prédéfini t1 remplit 0 < t1 ≤ T/2 ; et
une phase du deuxième signal de modulation droit est retardée d'un deuxième instant prédéfini t2 par rapport à une phase du premier signal de modulation droit et le deuxième instant prédéfini t2 vérifie 0 < t2 ≤ T/2 ;
dans lequel le deuxième transistor gauche est couplé à une première électrode du condensateur de stockage gauche, le premier transistor gauche est couplé entre le deuxième transistor gauche et le quatrième transistor gauche ; et le deuxième transistor droit est couplé à une première électrode du condensateur de stockage droit, le premier transistor droit est couplé entre le deuxième transistor droit et le quatrième transistor droit ; et
le procédé comprend :
la réception, par une grille (GA1) du premier transistor gauche (PGA), d'un premier signal de modulation gauche (MPGA), de sorte que le premier transistor gauche (PGA) est conducteur ; et la réception, par une grille (GA2) du deuxième transistor gauche (TGA), d'un deuxième signal de modulation gauche (MTGA), de sorte que le deuxième transistor gauche (TGA) est conducteur, dans lequel
le premier signal de modulation gauche (MPGA) et le deuxième signal de modulation gauche (MTGA) ont chacun une période de T et le deuxième signal de modulation gauche (MTGA) et le premier signal de modulation gauche (MPGA) ont une différence de phase ;
la réception, par une grille (GB1) du premier transistor droit (PGB), d'un premier signal de modulation droit (MPGB), de sorte que le premier transistor droit (PGB) est conducteur ; et la réception, par une grille (GB2) du deuxième transistor droit (TGB), d'un deuxième signal de modulation droit (MTGB), de sorte que le deuxième transistor droit(TGB) est conducteur, dans lequel
le premier signal de modulation droit (MPGB) et le deuxième signal de modulation droit (MTGB) ont chacun une période T, et le deuxième signal de modulation droit (MTGB) et le premier signal de modulation droit (MPGB) ont une différence de phase ;
la réception, par une grille (GA4) du quatrième transistor gauche (TXA), d'un signal de courant continu gauche, une valeur de tension du signal de courant continu gauche est inférieure ou égale à une amplitude du premier signal de modulation gauche ; et
la réception, par une grille (GB4) du quatrième transistor droit (TXB), d'un signal de courant continu droit, une valeur de tension du signal de courant continu droit est inférieure ou égale à une amplitude du premier signal de modulation droit.

6. Circuit de pixel de capteur d'image (203), comprenant :
un élément photosensible (20) ;
un canal de transmission gauche (30) couplé à une première extrémité (c) de l'élément photosensible (20), le canal de transmission gauche (30) comprenant un premier transistor gauche (PGA) et un deuxième transistor gauche (TGA) connectés en série ;
un canal de transmission droit (31) couplé à la première extrémité (c) de l'élément photosensible (20), le canal de transmission droit (31) comprenant un premier transistor droit (PGB) et un deuxième transistor droit (TGB) connectés en série ;
un condensateur de stockage gauche (CA), situé à une extrémité du canal de transmission gauche (30) ; et
un condensateur de stockage droit (CB), situé à une extrémité du canal de transmission droit (31), dans lequel
le premier transistor gauche (PGA) est couplé à la première extrémité (c) de l'élément photosensible (20), et le deuxième transistor gauche (TGA) est couplé entre le condensateur de stockage gauche (CA) et le premier transistor gauche (PGA) ; une grille (GA1) du premier transistor gauche (PGA) reçoit un premier signal de modulation gauche (MPGA), une grille (GA2) du deuxième transistor gauche (TGA) reçoit un deuxième signal de modulation gauche (MTGA), et le premier signal de modulation gauche (MPGA) et le deuxième signal de modulation gauche (MTGA) ont chacun une période T, et ont une même phase ; et une amplitude du premier signal de modulation gauche (MPGA) est inférieure à une amplitude du deuxième signal de modulation gauche (MTGA) ; et
le premier transistor droit (PGB) est couplé à la première extrémité (c) de l'élément photosensible (20), et le deuxième transistor droit (TGB) est couplé entre le condensateur de stockage droit (CB) et le premier transistor droit (PGB) ; une grille (GB1) du premier transistor droit (PGB) reçoit un premier signal de modulation droit (MPGB), une grille (GB2) du deuxième transistor droit (TGB) reçoit un deuxième signal de modulation droit (MTGB), le premier signal de modulation droit (MPGB) et le deuxième signal de modulation droit (MTGB) ont chacun une période T et ont une même phase ; et une amplitude du premier signal de modulation droit (MPGB) est inférieure à une amplitude du deuxième signal de modulation droit (MTGB) ; dans lequel
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA), et une grille (GA4) du quatrième transistor gauche (TXA) reçoit un signal de courant continu gauche ; et
le canal de transmission droit (31) comprend en outre un quatrième transistor droit (TXB), le quatrième transistor droit (TXB) est connecté en série avec le premier transistor droit (PGB) et le deuxième transistor droit (TGB), et une grille (GB4) du quatrième transistor droit (TXB) reçoit un signal de courant continu droit ;
dans lequel
le quatrième transistor gauche est couplé à une première électrode du condensateur de stockage gauche, le deuxième transistor gauche est couplé entre le premier transistor gauche et le quatrième transistor gauche, et une valeur de tension du signal de courant continu gauche est supérieure ou égale à une amplitude du deuxième signal de modulation gauche ; et
le quatrième transistor droit est couplé à une première électrode du condensateur de stockage droit, le deuxième transistor droit est couplé entre le premier transistor droit et le quatrième transistor droit et une valeur de tension du signal de courant continu droit est supérieure ou égale à une amplitude du deuxième signal de modulation droit.

7. Circuit de pixel de capteur d'image (203), comprenant :
un élément photosensible (20) ;
un canal de transmission gauche (30) couplé à une première extrémité (c) de l'élément photosensible (20), le canal de transmission gauche (30) comprenant un premier transistor gauche (PGA) et un deuxième transistor gauche (TGA) connectés en série ;
un canal de transmission droit (31) couplé à la première extrémité (c) de l'élément photosensible (20), le canal de transmission droit (31) comprenant un premier transistor droit (PGB) et un deuxième transistor droit (TGB) connectés en série ;
un condensateur de stockage gauche (CA), situé à une extrémité du canal de transmission gauche (30) ; et
un condensateur de stockage droit (CB), situé à une extrémité du canal de transmission droit (31), dans lequel
le premier transistor gauche (PGA) est couplé à la première extrémité (c) de l'élément photosensible (20), et le deuxième transistor gauche (TGA) est couplé entre le condensateur de stockage gauche (CA) et le premier transistor gauche (PGA) ; une grille (GA1) du premier transistor gauche (PGA) reçoit un premier signal de modulation gauche (MPGA), une grille (GA2) du deuxième transistor gauche (TGA) reçoit un deuxième signal de modulation gauche (MTGA), et le premier signal de modulation gauche (MPGA) et le deuxième signal de modulation gauche (MTGA) ont chacun une période T, et ont une même phase ; et une amplitude du premier signal de modulation gauche (MPGA) est inférieure à une amplitude du deuxième signal de modulation gauche (MTGA) ; et
le premier transistor droit (PGB) est couplé à la première extrémité (c) de l'élément photosensible (20), et le deuxième transistor droit (TGB) est couplé entre le condensateur de stockage droit (CB) et le premier transistor droit (PGB) ; une grille (GB1) du premier transistor droit (PGB) reçoit un premier signal de modulation droit (MPGB), une grille (GB2) du deuxième transistor droit (TGB) reçoit un deuxième signal de modulation droit (MTGB), le premier signal de modulation droit (MPGB) et le deuxième signal de modulation droit (MTGB) ont chacun une période T et ont une même phase ; et une amplitude du premier signal de modulation droit (MPGB) est inférieure à une amplitude du deuxième signal de modulation droit (MTGB) ; dans lequel
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA), et une grille (GA4) du quatrième transistor gauche (TXA) reçoit un signal de courant continu gauche ; et
le canal de transmission droit (31) comprend en outre un quatrième transistor droit (TXB), le quatrième transistor droit (TXB) est connecté en série avec le premier transistor droit (PGB) et le deuxième transistor droit (TGB), et une grille (GB4) du quatrième transistor droit (TXB) reçoit un signal de courant continu droit ;
dans lequel
le deuxième transistor gauche est couplé à une première électrode du condensateur de stockage gauche, le premier transistor gauche est couplé entre le deuxième transistor gauche et le quatrième transistor gauche, et une valeur de tension du signal de courant continu gauche est inférieure ou égale à une amplitude du premier signal de modulation gauche ; et
le deuxième transistor droit est couplé à une première électrode du condensateur de stockage droit, le premier transistor droit est couplé entre le deuxième transistor droit et le quatrième transistor droit, et une valeur de tension du signal de courant continu droit est inférieure ou égale à une amplitude du premier signal de modulation droit.

8. Procédé de commande d'un circuit de pixel de capteur d'image (203), dans lequel le circuit de pixel de capteur d'image (203) comprend un élément photosensible (20), et un canal de transmission gauche (30) et un canal de transmission droit (31) qui sont couplés séparément à une première extrémité (c) de l'élément photosensible (20), le canal de transmission gauche (30) comprenant un premier transistor gauche (PGA) et un deuxième transistor gauche (TGA) connectés en série, et le canal de transmission droit (31) comprenant un premier transistor droit (PGB) et un deuxième transistor droit (TGB) connectés en série ;
le circuit de pixel de capteur d'image (203) comprend en outre un condensateur de stockage gauche (CA) situé à une extrémité du canal de transmission gauche (30), et un condensateur de stockage droit (CB) situé à une extrémité du canal de transmission droit (31), le premier transistor gauche (PGA) étant couplé à la première extrémité (c) de l'élément photosensible (20), et le deuxième transistor gauche (TGA) étant couplé entre le condensateur de stockage gauche (CA) et le premier transistor gauche (PGA) ; et le premier transistor droit (PGB) étant couplé à la première extrémité (c) de l'élément photosensible (20), et le deuxième transistor droit (TGB) étant couplé entre le condensateur de stockage droit (CB) et le premier transistor droit (PGB) ;
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA) ; et
le canal de transmission droit (31) comprend en outre un quatrième transistor droit (TXB), le quatrième transistor droit (TXB) est connecté en série avec le premier transistor droit (PGB) et le deuxième transistor droit (TGB) ;
dans lequel le quatrième transistor gauche est couplé à une première électrode du condensateur de stockage gauche, le deuxième transistor gauche est couplé entre le premier transistor gauche et le quatrième transistor gauche ; et le quatrième transistor droit est couplé à une première électrode du condensateur de stockage droit, le deuxième transistor droit est couplé entre le premier transistor droit et le quatrième transistor droit ; et
le procédé comprend :
la réception, par une grille (GA1) du premier transistor gauche (PGA), d'un premier signal de modulation gauche (MPGA), de sorte que le premier transistor gauche (PGA) est conducteur ; et la réception, par une grille (GA2) du deuxième transistor gauche (TGA), d'un deuxième signal de modulation gauche (MTGA), de sorte que le deuxième transistor gauche (TGA) est conducteur, dans lequel
le premier signal de modulation gauche (MPGA) et le deuxième signal de modulation gauche (MTGA) ont chacun une période T, et ont une même phase, et une amplitude du premier signal de modulation gauche (MPGA) est inférieure à une amplitude du deuxième signal de modulation gauche (MTGA) ;
la réception, par une grille (GB1) du premier transistor droit (PGB), d'un premier signal de modulation droit (MPGB), de sorte que le premier transistor droit (PGB) est conducteur ; et la réception, par une grille (GB2) du deuxième transistor droit (TGB), d'un deuxième signal de modulation droit (MTGB), de sorte que le deuxième transistor droit(TGB) est conducteur, dans lequel
le premier signal de modulation droit (MPGB) et le deuxième signal de modulation droit (MTGB) ont chacun une période T, et ont une même phase, et une amplitude du premier signal de modulation droit (MPGB) est inférieure à une amplitude du deuxième signal de modulation droit (MTGB) ;
la réception, par une grille (GA4) du quatrième transistor gauche (TXA), d'un signal de courant continu gauche, une valeur de tension du signal de courant continu gauche est supérieure ou égale à une amplitude du deuxième signal de modulation gauche ; et
la réception, par une grille (GB4) du quatrième transistor droit (TXB), d'un signal de courant continu droit, une valeur de tension du signal de courant continu droit est supérieure ou égale à une amplitude du deuxième signal de modulation droit.

9. Procédé de commande d'un circuit de pixel de capteur d'image (203), dans lequel le circuit de pixel de capteur d'image (203) comprend un élément photosensible (20), et un canal de transmission gauche (30) et un canal de transmission droit (31) qui sont couplés séparément à une première extrémité (c) de l'élément photosensible (20), le canal de transmission gauche (30) comprenant un premier transistor gauche (PGA) et un deuxième transistor gauche (TGA) connectés en série, et le canal de transmission droit (31) comprenant un premier transistor droit (PGB) et un deuxième transistor droit (TGB) connectés en série ;
le circuit de pixel de capteur d'image (203) comprend en outre un condensateur de stockage gauche (CA) situé à une extrémité du canal de transmission gauche (30), et un condensateur de stockage droit (CB) situé à une extrémité du canal de transmission droit (31), le premier transistor gauche (PGA) étant couplé à la première extrémité (c) de l'élément photosensible (20), et le deuxième transistor gauche (TGA) étant couplé entre le condensateur de stockage gauche (CA) et le premier transistor gauche (PGA) ; et le premier transistor droit (PGB) étant couplé à la première extrémité (c) de l'élément photosensible (20), et le deuxième transistor droit (TGB) étant couplé entre le condensateur de stockage droit (CB) et le premier transistor droit (PGB) ;
le canal de transmission gauche (30) comprend en outre un quatrième transistor gauche (TXA), le quatrième transistor gauche (TXA) est connecté en série avec le premier transistor gauche (PGA) et le deuxième transistor gauche (TGA) ; et
le canal de transmission droit (31) comprend en outre un quatrième transistor droit (TXB), le quatrième transistor droit (TXB) est connecté en série avec le premier transistor droit (PGB) et le deuxième transistor droit (TGB) ;
dans lequel le deuxième transistor gauche est couplé à une première électrode du condensateur de stockage gauche, le premier transistor gauche est couplé entre le deuxième transistor gauche et le quatrième transistor gauche ; et le deuxième transistor droit est couplé à une première électrode du condensateur de stockage droit, le premier transistor droit est couplé entre le deuxième transistor droit et le quatrième transistor droit ; et
le procédé comprend :
la réception, par une grille (GA1) du premier transistor gauche (PGA), d'un premier signal de modulation gauche (MPGA), de sorte que le premier transistor gauche (PGA) est conducteur ; et la réception, par une grille (GA2) du deuxième transistor gauche (TGA), d'un deuxième signal de modulation gauche (MTGA), de sorte que le deuxième transistor gauche (TGA) est conducteur, dans lequel
le premier signal de modulation gauche (MPGA) et le deuxième signal de modulation gauche (MTGA) ont chacun une période T, et ont une même phase, et une amplitude du premier signal de modulation gauche (MPGA) est inférieure à une amplitude du deuxième signal de modulation gauche (MTGA) ;
la réception, par une grille (GB1) du premier transistor droit (PGB), d'un premier signal de modulation droit (MPGB), de sorte que le premier transistor droit (PGB) est conducteur ; et la réception, par une grille (GB2) du deuxième transistor droit (TGB), d'un deuxième signal de modulation droit (MTGB), de sorte que le deuxième transistor droit(TGB) est conducteur, dans lequel
le premier signal de modulation droit (MPGB) et le deuxième signal de modulation droit (MTGB) ont chacun une période T, et ont une même phase, et une amplitude du premier signal de modulation droit (MPGB) est inférieure à une amplitude du deuxième signal de modulation droit (MTGB) ;
la réception, par une grille (GA4) du quatrième transistor gauche (TXA), d'un signal de courant continu gauche, une valeur de tension du signal de courant continu gauche est inférieure ou égale à une amplitude du premier signal de modulation gauche ; et
la réception, par une grille (GB4) du quatrième transistor droit (TXB), d'un signal de courant continu droit, une valeur de tension du signal de courant continu droit est inférieure ou égale à une amplitude du premier signal de modulation droit.

10. Capteur d'image, comprenant un substrat semi-conducteur et une matrice de pixels disposée sur le substrat semi-conducteur, la matrice de pixels comprenant une pluralité de structures de pixels agencées dans une matrice, et chaque structure de pixels comprenant le circuit de pixel de capteur d'image selon l'une quelconque des revendications 1 à 3 ou des revendications 6 à 7.

11. Dispositif terminal, comprenant une puce de commande et le capteur d'image selon la revendication 10, dans lequel la puce de commande comprend une extrémité de signal de modulation configurée pour fournir un signal de modulation ; et
l'extrémité de signal de modulation est couplée séparément aux grilles du premier transistor gauche, du deuxième transistor gauche, du premier transistor droit et du deuxième transistor droit dans le circuit de pixel de capteur d'image.
